(19) Europäisches Patentamt

European Patent Office

Office européen des brevets

(11) Publication number: **0 368 636 B1**

(12) **EUROPEAN PATENT SPECIFICATION**

(45) Date of publication of patent specification: **09.06.93**   (51) Int. Cl.⁵: **F15B 13/08**, F15B 11/05

(21) Application number: **89311554.3**

(22) Date of filing: **08.11.89**

(54) **Hydraulic control system.**

(30) Priority: **10.11.88 JP 284593/88**

(43) Date of publication of application:
**16.05.90 Bulletin 90/20**

(45) Publication of the grant of the patent:
**09.06.93 Bulletin 93/23**

(84) Designated Contracting States:
**DE FR IT**

(56) References cited:
EP-A- 0 232 683          DE-A- 2 701 509
DE-A- 3 422 165          DE-A- 3 428 403
FR-A- 2 587 419          FR-A- 2 609 119
JP-A-60 011 706          US-A- 4 154 262

(73) Proprietor: **DIESEL KIKI CO., LTD.**
**No. 6-7, Shibuya 3-chome**
**Shibuya-ku Tokyo(JP)**

Proprietor: **HITACHI CONSTRUCTION MACHIN-ERY CO., LTD.**
**6-2, Ohtemachi 2-chome**
**Chiyoda-ku Tokyo 100(JP)**

(72) Inventor: **Morikawa, Rindo c/o Diesel Kiki Co., Ltd.**
**Higashimatsuyama Factory 13-26, Yakyucho 3-chome**
**Higashimatsuyama-Shi Saitama-Ken(JP)**

(74) Representative: **Votier, Sidney David et al**
**CARPMAELS & RANSFORD 43, Bloomsbury Square**
**London WC1A 2RA (GB)**

## Description

BACKGROUND OF THE INVENTION

This invention relates to a hydraulic control system for controlling the operations of a plurality of actuators.

A civil engineering machine (e.g., a power shovel) or other machine including a plurality of actuators is equipped with a hydraulic control system. One such conventional hydraulic control system as described in the prior art section of the specification of Japanese Laid-Open (Kokai) Patent Application No. 11706/85 (DE-A-3422 165) comprises one pump of a large capacity, directional control valves corresponding respectively to the actuators, and flow control valves of the pressure compensating type (hereinafter referred to as "pressure compensation valves"). Each pressure compensation valve is connected between the pump and its mating directional control valve.

Each directional control valve has two actuator ports connected to the actuator, and a spool which can be moved through an external operation. When the spool is moved from its neutral position in one direction, one of the actuator ports is selectively communicated with the pressure compensation valve, so that oil fed from the pump is supplied to the actuator via the pressure compensation valve and the selected actuator port, thereby driving the actuator in one direction. When the spool of the directional control valve is moved in the opposite direction, the other actuator port is communicated with the pressure compensation valve, so that the actuator is driven in the opposite direction. The directional control valve has a throttle portion which varies in the degree of opening (i.e., the cross-sectional area of flow) in accordance with the position of the spool.

Each pressure compensation valve comprises a balance piston, a spring urging the balance piston, and a throttle portion whose degree of opening is controlled by the balance piston. A pressure (pressure supplied to the directional control valve from the pressure compensation valve) in a passage extending between the throttle portion of the pressure compensation valve and the throttle portion of the directional control valve is applied to the balance piston, and also a load pressure produced in the actuator is applied to the balance piston. These two pressures act on the balance piston in opposite directions. The position of the balance piston and hence the degree of opening of the throttle portion of the pressure compensation valve are so determined that a pressure differential across the balance piston (i.e., a difference between these two pressures) can be kept at a predetermined target value or level. This target value is determined by the spring force of the above spring.

Thus, with the use of the pressure compensation valve, irrespective of the load pressure produced in each actuator, the actuator receives an amount of the oil (per unit time) corresponding to the degree of opening of the throttle portion determined by the position of the spool of the directional control valve.

When the total amount of the oil per unit time, required by the actuators operating at the same time, becomes too large, the ability of the pump to output the oil becomes inadequate, so that the pump pressure decreases. At this time, the pressure compensation valves fully open the throttle so that the difference between the supply pressure supplied from the pressure compensation valve and the load pressure can be increased to the target value determined by the spring (Actually, this difference does not reach this target value). As a result, the pressure compensation valves lose their pressure compensation function, so that those of the actuators receiving relatively small loads are driven whereas the other actuators receiving relatively heavy loads are not driven.

The hydraulic control system shown in the drawings of the above Japanese Laid-Open Patent Application No. 11706/85 overcomes the above problems. In this conventional hydraulic control system, the maximum load pressure is applied to the balance pistons of all of the pressure compensation valves in the direction to close the throttles of the pressure compensation valves, and at the same time the pressure of the pump is applied to the balance pistons in the direction to open the throttles of the pressure control valves. Here, "the maximum load pressure" means the greatest load pressure among the load pressures produced in the plurality of actuators. The force produced due to a difference between the pump pressure and the maximum load pressure is used instead of the force produced by the aforesaid spring. In this hydraulic control system, when the total amount of the oil required by the actuators per unit time exceeds the ability of the pump to output the oil to decrease the pump pressure so that the difference between the pump pressure and the maximum load pressure decreases, the difference between the load pressure and the supply pressure supplied from the pressure compensation valves decreases in all the pressure compensation valves. As a result, the amounts of supply of the oil per unit time to those of the actuators which are being driven are reduced at the same rate. In this condition, the throttle portion of the pressure compensation valve corresponding to the actuator subjected to the maximum load pressure is fully opened, and the throttling functions of the other pressure compensation valves are secured, and hence those of the actuators corresponding to those of the directional control valves in their operative condition can be all driven irrespective of the magnitude of the load.

In order to determine the maximum load pressure among the above load pressures, there are used shuttle valves the number of which is less by one than the number of the plurality of actuators.

Other hydraulic control systems of the type, which include directional control valves, pressure compensation valves and check valves replacing shuttle valves (each group of valves correspond in number to the actuators), are disclosed in U. S. Patent No. 4,739,617, West German Patent No. DE 36 44 737, and FR-A-2587 419

The above-mentioned hydraulic control systems have been proposed as relatively abstract hydraulic circuits, and a practical hydraulic control system of the type in which directional control valves, pressure compensation valves and shuttle valves are incorporated or mounted in a body have not yet been developed.

Incidentally, Japanese Patent Publication No. 10707/86, Japanese Laid-Open Patent Application No. 110884/82, and U. S. patent No. 4,856,549 (filed by the other of the two Applicants of the present application) disclose the prior art which incorporate or contain at least one group of directional control valves, pressure compensation valves and shuttle valves in a body, although these prior art are different from the above-mentioned hydraulic control system.

## SUMMARY OF THE INVENTION

It is an object of this invention to provide a hydraulic control system comprising a hydraulic control apparatus which is simple in construction, and includes one body of a compact-size incorporating or containing therein directional control valves, pressure compensation valves and shuttle valves.

According to the present invention, there is provided a hydraulic control system for driving a plurality of actuators, comprising:

(a) a pump;

(b) a plurality of directional control valves corresponding respectively to the plurality of actuators, each directional control valve comprising a pair of downstream throttle portions disposed between the pump and the corresponding actuator, and a spool for controlling the degree of opening of the pair of downstream throttle portions, and either of the two downstream throttle portions being opened in accordance with the movement of the spool to apply fluid to the corresponding actuator from the pump;

(c) detection valve means comprising at least one detection valve for detecting the maximum load pressure among load pressures of the plurality of actuators;

(d) a plurality of pressure compensation valves corresponding respectively to the plurality of actuators, each pressure compensation valve comprising an upstream throttle portion disposed between the pump and the pair of downstream throttle portions, and a balance piston for controlling the degree of opening of the upstream throttle portion, the balance piston having a first pressure receiving portion for receiving the load pressure of the corresponding actuator so as to move the balance piston in a direction to open the upstream throttle portion, the balance piston also having a second pressure receiving portion for receiving a supply pressure supplied from the upstream throttle portion to the downstream throttle portions so as to move the balance piston in a direction to close the upstream throttle portion, the balance piston including pressure receiving means for substantially receiving an operating pressure which decreases when the difference between the pressure of the pump and the maximum load pressure detected by the detection valve means decreases so that the balance piston can be moved in the direction to open the upstream throttle portion, and the position of the balance piston being so controlled that the force acting on the balance piston due to the difference between the supply pressure and the load pressure can be in equilibrium with the force acting on the balance piston due to the operating pressure received by the pressure receiving means; and

(e) body means comprising a plurality of regions corresponding respectively to the plurality of actuators, the plurality of directional control valves as well as the plurality of pressure compensation valves being mounted respectively in the plurality of regions, each of the regions including a straight first hole and a straight second hole substantially perpendicularly intersecting a central portion of the first hole, the spool being slidably received in the first hole of the corresponding region of the body means, the intersection between the first and second holes forming a load pressure chamber for receiving the load pressure of the corresponding actuator, and the second hole having a first portion and a second portion between which the load pressure chamber is interposed, the balance piston of the pressure compensation valve being slidably received in the first portion of the second hole of the corresponding region of the body means, the first pressure receiving portion of the balance piston being directed toward the load pressure chamber, and the detection valve being received in the second portion of the second hole of one of the regions of the body means so as to receive the load pressure from the load pressure chamber.

## BRIEF DESCRIPTION OF THE DRAWINGS

Fig. 1 is a schematic view showing a hydraulic control system of the present invention for use with a power shovel;

Fig. 2 is an enlarge schematic view of a body of the hydraulic control system;

Fig. 3 is a cross-sectional view taken along the line III-III of Fig. 2;

Fig. 4 is an enlarged cross-sectional view of the body, showing a pressure compensation valve;

Fig. 5 is a cross-sectional view of the body taken through a plane perpendicular to the sheet of Fig. 3, showing shuttle valves;

Fig. 6 is a cross-sectional view of the body;

Fig. 7 is a cross-sectional view taken along the line VII-VII of Fig. 6;

Fig. 8 is a cross-sectional view of an unload and relief valve device;

Fig. 9 is a diagram of a hydraulic circuit of the hydraulic control system; and

Fig. 10 is a view similar to Fig. 4, but showing a modified form of the invention.

## DESCRIPTION OF THE PREFERRED EMBODIMENTS OF THE INVENTION

The invention will now be described with reference to the drawings.

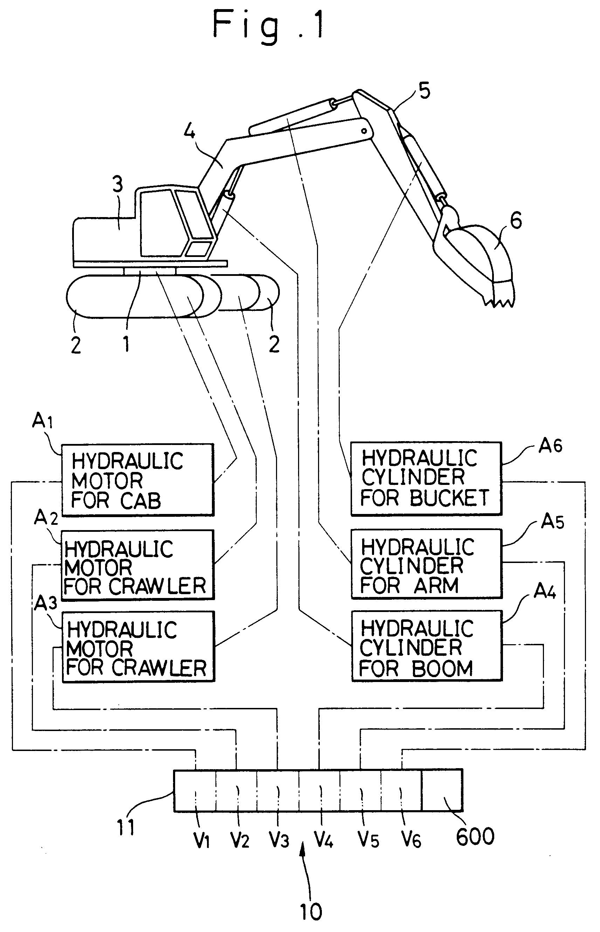

A power shovel shown in Fig. 1 comprises a vehicle body 1, a pair of crawlers 2 and 2 mounted on the vehicle body 1, an operator's cab 3 mounted on the vehicle body 1 so as to be turned horizontally, a boom 4 mounted on the operator's cab 3 so as to be angularly moved vertically, an arm 5 connected to the distal end of the boom 4 so as to be angularly moved vertically, and a bucket 6 connected to the distal end of the arm 5 so as to be angularly moved vertically. The operator's cab 3 is driven by a hydraulic motor A1 (actuator) for horizontal turning movement. The pair of crawlers 2 and 2 are driven by hydraulic motors A2 and A3 (actuators), respectively. The boom 4, the arm 5 and the bucket 6 are driven respectively by hydraulic cylinders A4, A5 and A6 (actuators) for angular movement. The three hydraulic motors A1 to A3 and the three hydraulic cylinders A4 to A6 are connected to a hydraulic control apparatus 10 of the present invention, and are controlled by this apparatus.

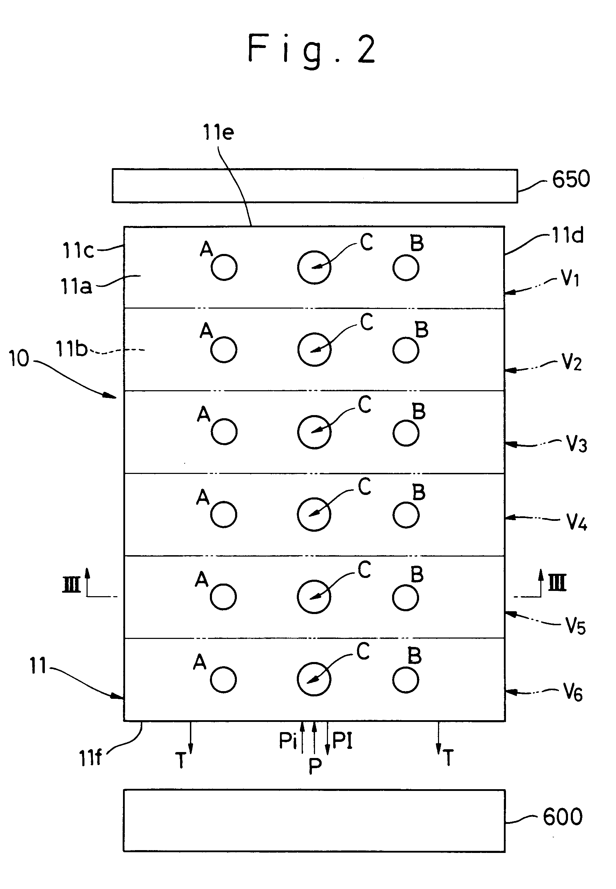

As schematically shown in Figs. 1 and 2, the hydraulic control apparatus 10 comprises a body 11 in the form of a substantially rectangular parallelepipedic block, an end plate 650, and an unload relief valve device 600. The end plate 650 and the unload and relief valve device 600 are mounted on the body 11 in stacked relation thereto. The body 11 has an upper face 11a, a lower face 11b, opposite side faces 11c and 11d, and opposite end faces 11e and 11f. The body 11 has six regions or portions V1 to V6 corresponding respectively to the six actuators A1 to A6. The regions V1 to V6 are arranged in this order from the end face 11e to the end face 11f along the length of the body 11. Each of the regions V1 to V6 has two actuator ports A and B which are connected to a respective one of the actuators A1 to A6 via two pipes (not shown). For example, with respect to the hydraulic cylinders A4 to A6, each pair of actuator ports A and B are connected respectively to two oil chambers of a respective one of these hydraulic cylinders.

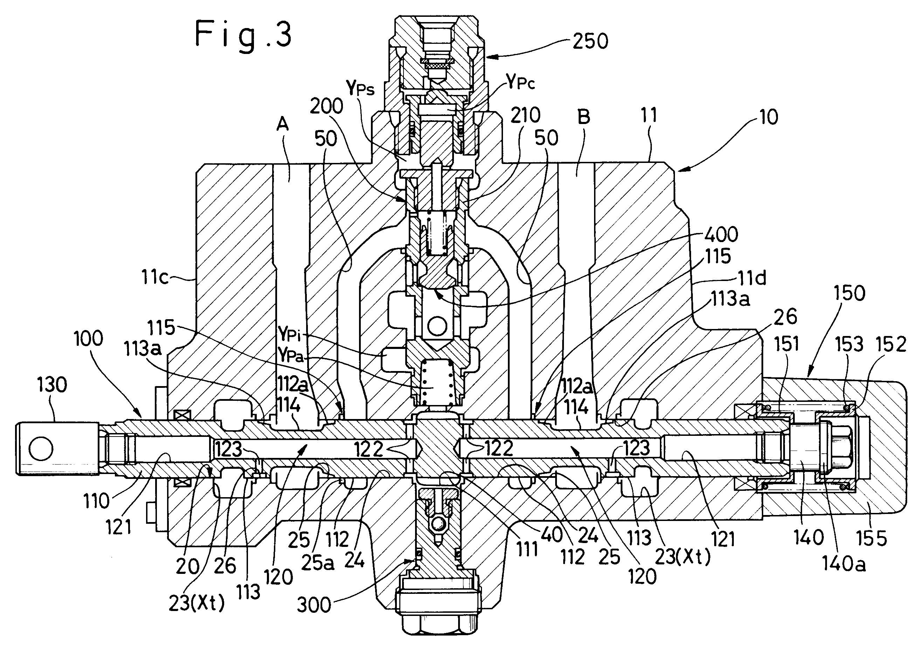

As shown in Fig. 3, a directional control valve 100, a pressure compensation valve 200 and a shuttle valve 300 are incorporated in each of the five regions V2 to V6 of the body 11. The directional control valve 100 serves to control the direction of flow of the oil to a corresponding one of the actuators A1 to A6 and to control the flow rate of the oil. The pressure compensation valve 200 serves to compensate for the amount of the oil flowing through the directional control valve 100. The shuttle valves 300 serve to select the greatest (maximum) load pressure among the load pressures acting respectively on the actuators A1 to A6. A similar directional control valve 100 and a similar pressure compensation valve 200 are incorporated in the region V1 disposed immediately adjacent to the end face 11e of the body 11.

## Construction of the Body 11

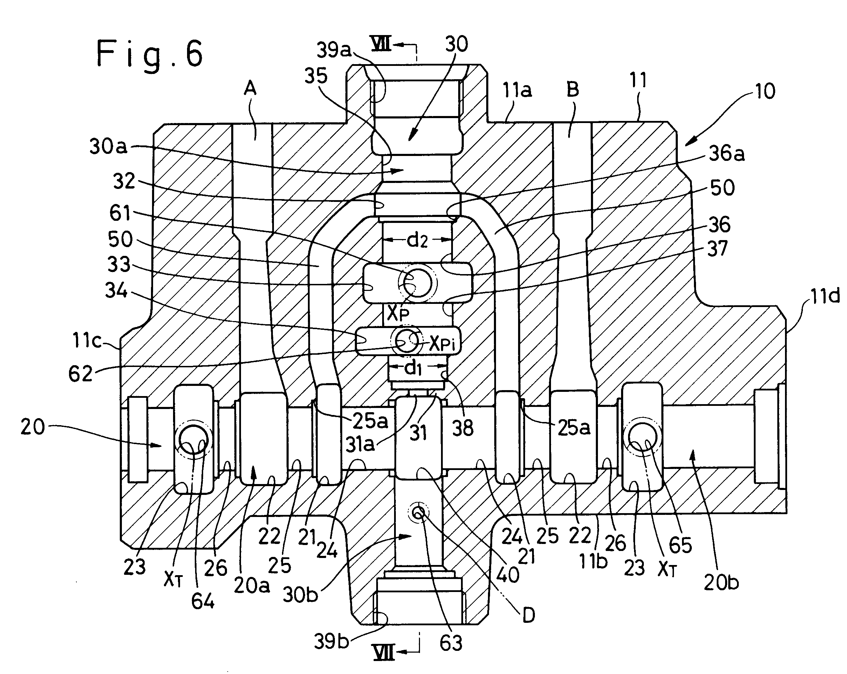

Before explaining the above valves 100, 200 and 300, the construction of the body 11 will now be described. As shown in Fig. 6, each of the regions V1 to V6 of the body 11 has the two actuator ports A and B extending vertically and opening to the upper face 11a; a transverse hole 20 horizontally extending straight through the body 11 and opening at its opposite ends to the opposite side faces 11c and 11d of the body 11; and a vertical hole 30 vertically extending straight through the body 11 and opening at its opposite ends to the upper and lower faces 11a and 11b of the body 11. The vertical hole 30 perpendicularly intersects a central portion of the transverse hole 20, and a load pressure chamber 40 for receiving load pressure (later described) is provided at this intersection. The vertical hole 30 has an upper portion 30a disposed above the load pressure chamber 40, and a lower portion 30b disposed below the load pressure chamber 40. The transverse hole 20 is arranged generally symmetrically with respect to the center of the load pressure chamber 40, and left and right portions 20a and 20b of the transverse hole 20 communicate with the upper portion 30a of the vertical hole 30 via respective passages 50 and 50.

At each of the regions V1 to V6, the pair of actuator ports A and B, the transverse hole 20, the vertical hole 30, the load pressure chamber 40 and the two passages 50 and 50 are disposed substantially on a plane disposed perpendicular to the direction of arrangement of the regions V1 to V6.

Each of the left and right portions 20a and 20b of the transverse hole 20 has three annular grooves 21, 22 and 23 arranged in this order from the load pressure chamber 40. Each of the passages 50 and 50 communicates at its lower end with the corresponding inner annular groove 21. The actuator port A communicates at its lower end with the intermediate annular groove 22 of the left portion 20a, and similarly the actuator port B communicates at its lower end with the intermediate annular groove 22 of the right portion 20b. The outer annular grooves 23 communicate with tank ports Xt, respectively, as later described. The inner peripheral surface of each of the left and right portions 20a and 20b has a first guide portion 24 disposed between the load pressure chamber 40 and the annular groove 21, a second guide portion 25 disposed between the annular grooves 21 and 22, and a third guide portion 26 disposed between the annular grooves 22 and 23. Each of the left and right portions 20a and 20b of the transverse hole 20 has a narrow annular grooves 25a disposed immediately adjacent to one end of the guide groove 25 close to the load pressure chamber 40.

An abutment wall 31 is formed on the inner peripheral surface of the vertical hole 30 and disposed above the load pressure chamber 40, and a port 31a constituting part of the vertical hole 30 is formed through the abutment wall 31. The upper portion 30a of the vertical hole 30 communicates at its lower end with the load pressure chamber 40 via the port 31a. The upper portion 30a of the vertical hole 30 has three annular grooves 32, 33 and 34 arranged in this order from above. The pair of passages 50 and 50 communicate at their upper ends with the upper annular groove 32. The intermediate annular groove 33 communicates with a pump port Xp as later described. The lower annular groove 34 communicates with a pilot pump port Xpi as later described. The annular grooves 33 and 34 are disposed between the pair of passages 50 and 50. The inner peripheral surface of the upper portion 30a of the vertical groove 30 are divided by the three annular grooves 32 to 34 into four guide portions 35 to 38 arranged in this order from above. The inner diameter d1 of the lowermost guide portion 38 is smaller than the inner diameter d2 of the other three guide portions 35 to 37. A narrow annular groove 36a is formed in the upper end of the guide portion 36.

The inner diameter of the upper end section of the upper portion 30a of the vertical hole 30 is greater than the inner diameter of the guide portion 35, and internal threads 39a are formed on the inner periphery of this upper end section.

The inner diameter of the lower end section of the lower portion 30b of the vertical hole 30 is greater than the inner diameter than the remainder of the lower portion 30b, and internal threads 39b are formed on the inner peripheral surface of this lower end section.

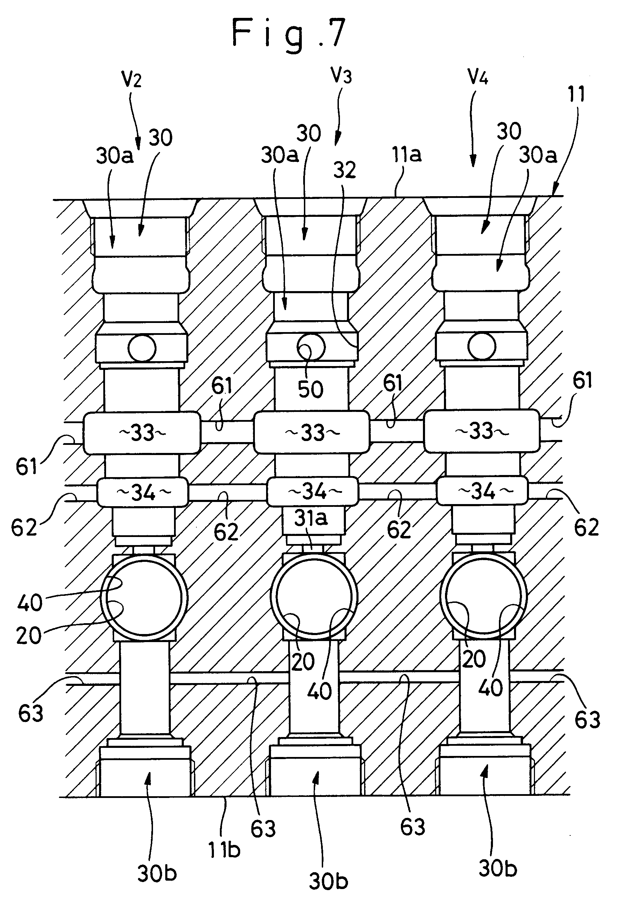

As shown in Figs. 6 and 7, the annular grooves 33 of the upper portions 30a of the vertical holes 30 of each adjacent ones of the regions V1 to V6 communicate with each other via a passage 61. The annular groove 33 of the region V6 disposed immediately adjacent to the end face 11f of the body 11 communicates via a passage 61 with the pump port Xp formed in the end face 11f of the body 11. With this arrangement, the annular grooves 33 of the six regions V1 to V6 all communicate with the pump port Xp.

The annular grooves 34 of each adjacent ones of the regions V1 to V6 communicate with each other via a passage 62. The annular groove 34 of the region V6 disposed immediately adjacent to the end face 11f of the body 11 communicates via a passage 62 with the pilot pump port Xpi formed in the end face 11f of the body 11. With this arrangement, the annular grooves 34 of the six regions V1 to V6 all communicate with the pilot pump port Xpi.

The lower portions 30b of the vertical holes 30 of each adjacent ones of the regions V1 to V6 communicate with each other via a passage 63. The lower portion 30b of the region V6 disposed immediately adjacent to the end face 11f of the body 11 communicates via a passage 63 with a detection pressure port D formed in the end face 11f of the body 11.

The annular grooves 23 of the left portions 20a of the transverse holes 20 of each adjacent ones of the regions V1 to V6 communicate with each other via a passage 64. Similarly, the annular grooves 23 of the right portions 20b of the transverse holes 20 of each adjacent ones of the regions V1 to V6 communicate with each other via a passage 65. The annular grooves 23 of the region V6 disposed immediately adjacent to the end face 11f of the body 11 respectively communicate via respective passages 64 and 65 with the pair of tank ports Xt formed in the end face 11f of the body 11.

The six passages 61, the six passages 62, the six passages 63, the six passages 64 and the six passages 65 extend along five straight lines, respectively.

As is clear from Fig. 6, the load pressure chambers 40 of the regions V1 to V6 are disposed independently of one another.

At each of the regions V1 to V6 of the body 11, the directional control valve 100 is received in the transverse hole 20, and the pressure compensation valve 200 is received in the upper portion 30a of the vertical hole 30. At each of the regions V2 to V6, the shuttle valve 300 is received in the lower portion 30b of the vertical hole 30.

Construction of the Directional Control Valve 100

As shown in Fig. 3, the directional control valve 100 includes a spool 110 which is slidably received in the transverse hole 20 for movement therealong. The spool 110 has at its central portion a land portion 111 received in the load pressure chamber 40. Each of the left and right portions of the spool 110 has two land portions 112 and 113 arranged in this order from the land portion 111 toward the end of the spool 110. The two land portions 112 of the left and right portions of the spool 110 cooperate respectively with the guide portions 25 of the left and right portions 20a and 20b of the transverse hole 20 to allow and interrupt the communication between the actuator port A and the corresponding passage 50 and the communication between the actuator B and the corresponding passage 50. The two land portions 113 of the left and right portions of the spool 110 cooperate respectively with the guide portions 26 of the left and right portions 20a and 20b of the transverse hole 20 to allow and interrupt the communication between the actuator port A and the corresponding tank port Xt and the communication between the actuator B and the corresponding tank port Xt. Each of the left and right portions of the spool 110 has an annular recess 114 disposed between the lands 112 and 113, and one end of the land portion 112 disposed immediately adjacent to the recess 114 is tapered as at 112a toward the recess 114. This tapered portion 112a cooperates with the annular groove 25a of the transverse hole 20 to constitute a throttle portion 115. A notch 113a is formed in one end of the land 113 disposed immediately adjacent to the recess 114.

Each of the left and right portions of the spool 110 has a passage 120. The passage 120 serves to communicate the load pressure chamber 40 with the actuator port A or the actuator port B when the spool 110 is operated, as will hereinafter be more fully described. Each passage 120 comprises an axial bore 121 extending axially from the end of the spool 110, and small-diameter holes 122 formed through the peripheral wall of the spool 110 and disposed between the land portions 111 and 112, and a stepped hole 123 of a small diameter formed radially through the land portion 113.

The opposite ends of the spool 110 are projected outwardly from the opposite side faces 11c and 11d of the body 11, respectively. Plugs 130 and 140 are threaded respectively into the ends of the axial holes 121 of the spool 110 at the opposite ends of the spool 110. An operating lever (not shown) is connected to the left end of the spool 110 through the plug 130.

A centering spring mechanism 150 is connected to the right end of the spool 110 through the plug 140. The centering spring mechanism 150 is a known device which holds the spool 110 in its neutral position (shown in Fig. 3) when the above operating lever is in its inoperative condition. The centering spring mechanism 150 comprises a washer 151 engaged with the right end of the spool 110 in the neutral position of the spool 110, a washer 152 engaged with a flange 140a of the plug 140 in the neutral position of the spool 110, and a compression spring 153 acting between the two washers 151 and 152. The centering spring mechanism 150 is covered by a cover member 155 fixedly mounted on the side face 11d of the body 11.

Operation of the Directional Control Valve 100

The operation of the directional control valve 100 will now be described.

When the above operating lever is in its inoperative condition, the spool 110 is maintained in its neutral position shown in Fig. 3. In this condition, the land portions 112 and 113 of the left portion of the spool 110 are respectively held in contact with the guide portions 25 and 26 over the entire peripheries thereof. Therefore, the left actuator port A is not communicated with the mating passage 50 and the mating tank port Xt. Similarly, the right actuator port B is not communicated with the mating passage 50 and the mating tank portion Xt.

When the spool 110 is thus held in its neutral position, the load pressure chamber 40 is in communication with the tank ports Xt and Xt via the passages 120 and 120, and therefore the pressure in the load pressure chamber 40 is substantially equal to the atmospheric pressure.

When the operating lever is operated to move the spool 110 in a right-hand direction (Fig. 3), the land portion 113 of the left portion of the spool 110 is still kept in contact with the guide portion 26 of the transverse hole 20 over the entire periphery thereof, but the land portion 112 of the left portion of the spool 110 is disengaged from the guide portion 25 to open the throttle portion 115. Therefore, the actuator port A is caused to communicate with the passage 50, but the communication of the actuation port A with the tank port Xt remains interrupted. As a result, the oil under high pressure is fed from the pressure compensation valve 200 via the passage 50, the throttle 115 and the actuator port A to the corresponding actuator. At the same time, the land portion 112 of the right portion of the spool 110 is still kept in contact with the guide portion 25, but the notch 113a of the land portion 113 of the right portion of the spool 110 is released from the guide portion 26. Therefore, the actuator port B is caused to communicate with the tank port Xt, but the communication of the actuation port B with the passage 50 remains interrupted. As a result, the oil is fed from the corresponding actuator to a tank T (later described) via the actuator port B and the tank port Xt. Thus, the actuator is driven in one direction.

When the spool 110 is moved in the right-hand direction as described above, the small-diameter hole 123 of the left passage 120 is communicated with the actuator port A but is not communicated with the tank port Xt, so that the load pressure chamber 40 is caused to communicate with the actuator port A via the passage 120. At the same time, the small-diameter ports 122 of the right passage 120 are closed by the guide portion 24, so that the communication between the load pressure chamber 40 and the right tank port Xt is interrupted. Therefore, the load pressure appearing at the actuator port A can be introduced into the load pressure chamber 40.

When the operating lever is operated to move the spool 110 in a left-hand direction (Fig. 3), in contrast with the above, the high pressure oil is fed from the pressure compensation valve 200 to the corresponding actuator via the right passage 50, throttle portion 115 and actuator port B. The oil discharged from this actuator is returned to the tank T via the actuator port A and the tank port Xt. As a result, the actuator is driven in the opposite direction.

When the spool 110 is thus moved in the left-hand direction, the load pressure chamber 40 communicates with the actuator port B via the right passage 120, and is not communicated with the two tank ports Xt. Therefore, the load pressure appearing at the actuator port B can be introduced into the load pressure chamber 40.

When the spool 110 is moved in either the right or left direction as described above so that the high pressure oil flows into the actuator port A or B via the throttle portion 115, the degree of opening of the throttle portion 115 constitutes an important factor for determining the amount of supply of oil to the actuator.

Construction of the Pressure Compensation Valve 200

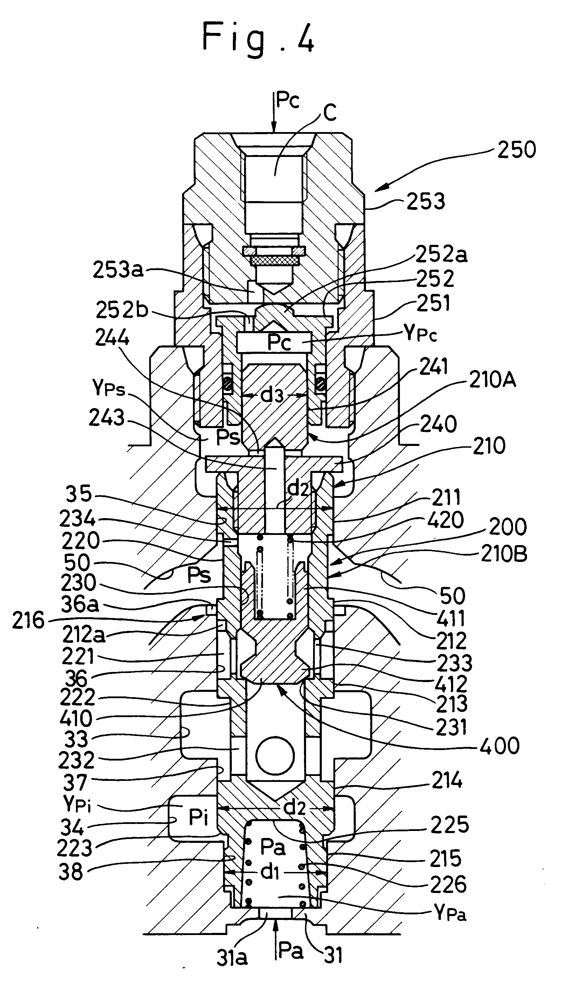

The construction of the pressure compensation valve 200 will now be described particularly with reference to Fig. 4. The pressure compensation valve 200 includes a balance piston 210. The balance piston 210 comprises an upper member 210A and a lower member 210B connected to the upper member 210A, the balance piston 210 being slidably received in the upper portion 30a of the vertical hole 30.

The lower member 210B has five land portions 211 to 215 arranged in this order from above. The diameter of the land portions 211 to 214 is substantially equal to the diameter d2 of the guide portions 35, 36 and 37 of the vertical hole 30 formed in the body 11. The diameter of the land portion 215 is substantially equal to the diameter d1 of the guide portion 38 of the vertical hole 30. The land portions 211 to 215 are always kept in contact with their mating guide holes 35 to 38 of the vertical hole 30. A notch 212a is formed in the lower end of the land portion 212, and the notch 212a cooperates with the annular groove 36a, formed in the guide portion 36, to constitute a throttle portion 216.

An annular recess 220, formed in the outer periphery of the lower member 210B and disposed between the land portions 211 and 212 communicates with the two passages 50 and 50 in the body 11. The guide portion 36 faces an annular recess 221 which is formed in the outer periphery of the lower member 210B and is disposed between the land portions 212 and 213. An annular recess 222, formed in the outer periphery of the lower member 210B and disposed between the land portions 213 and 214, is disposed in the annular groove 33 communicating with the pump port Xp. An annular stepped portion 223, formed on the outer periphery of the lower member 210B and disposed between the land portions 214 and 215 of different diameters, is exposed to the annular groove 34 communicating with the pilot pump port Xpi.

A recess 225 is formed in the lower end face of the lower member 210B of the balance piston 210, and a vibration-absorbing spring 226 is received in the recess 225.

The lower member 210B of the balance piston 210 has an axial hole 230 extending axially downward from the upper end face of the lower member 210B. The axial hole 230 has a lower reduced-diameter portion and an upper greater-diameter portion, and a step 231 is formed between these two portions. The step 231 serves as a valve seat as later described.

Received within the axial hole 230 of the lower member 210B is a load check valve 400 which comprises a valve body 410. The valve body 410 has a slide portion 411 disposed in sliding contact with the greater diameter portion of the axial hole 230, and a head 412 at its lower end. The valve body 410 is urged downward by a relatively weak spring 420 to hold the valve head 412 in sealing contact with the valve seat 231. The axial hole 230 is divided or partitioned by the slide portion 411 of the valve body 410 into two sections.

Holes 232 are formed through the peripheral wall of the lower member 210B of the balance piston 210, and are disposed below the valve seat 231. The axial hole 230 communicates with the pump port Xp via the through holes 232, the annular recess 222 and the annular groove 33 of the body 11. Holes 233 are formed through the peripheral wall of the lower member 210B, and are disposed above and adjacent to the valve seat 231. The axial hole 230 communicates with the annular recess 221 via the through holes 233. A hole 234 of a small diameter is also formed through the peripheral wall of the lower member 210B, and is disposed above the slide portion 411. The axial hole 230 communicates with the two passages 50 and 50 via the hole 234 and the annular recess 220.

The lower end portion of the upper member 210A of the balance piston 210 is threaded into the upper portion of the axial hole 230 of the lower member 210B. The upper member 210A has a peripheral flange 240 intermediate the opposite ends thereof, and the lower surface of the flange 240 abuts against the upper end of the lower member 210B. The upper member 210A has a land portion 241 disposed above the flange 240, the land portion 241 having a diameter d3. The relation of the diameter d3 with respect to the above-mentioned diameters d1 and d2 is as follows:

$$d3 < d1 < d2$$

The upper member 210A also has an axial hole 243 axially extending upwardly from the lower end face thereof, and holes 244 of a small diameter extending transversely from the upper end of the axial hole 243 to the outer peripheral surface of the upper member 210A, the holes 243 being disposed between the land portion 241 and the flange 240.

A cap assembly 250 is mounted in the upper end section of the vertical hole 30 of the body 11. The cap assembly 250 comprises a tubular adapter 251 threaded at its lower portion into the upper end section of the vertical hole 30, a cap-shaped bushing 252 received in the adapter 251, and a pipe fitting 253 threaded at its lower portion into the upper portion of the adapter 251 and held at its lower end face against a projection 252a formed on the upper end of the bushing 252. The land portion 241 of the upper member 210A of the balance piston 210 is slidably received in the bushing 252.

The pipe fitting 253 is has an axial hole C into which a pipe (not shown) is fitted. The axial hole C serves as a control pressure port for introducing a control pressure as later described. The pipe fitting 253 also has a hole 253a extending downward from the lower end of the control pressure port C to the lower end face of the pipe fitting 253. A hole 252b is formed through the upper wall of the bushing 252.

The pressure compensation valve 200 has four important pressure introduction chambers Ypc, Yps, Ypi and Ypa arranged in this order from above.

The uppermost or first pressure introduction chamber Ypc is formed between the upper wall of the bushing 252 and the land portion 241 of the balance piston 210. A control pressure Pc is fed from the control pressure port C to the pressure introduction chamber Ypc via the hole 253a of the pipe fitting 253, a space formed between the lower end face of the pipe fitting 253 and the upper end face of the bushing 252 and the hole 252b of the bushing 252.

The second pressure introduction chamber Yps is formed by the upper end section of the vertical hole 30 of the body 11 which is closed by the cap assembly 250. A supply pressure Ps supplied from the pressure compensation valve 200 to the directional control valve 100 (that is, the pressure in the passages 50) is introduced into the pressure introduction chamber Yps via the hole 234, a space between the upper member 210A of the balance piston 210 and the valve member 410 of the load check valve 400, the axial hole 243 and the holes 244.

The third pressure introduction chamber Ypi is formed by the annular groove 34 and the outer peripheral surface of the balance piston 210. A pilot pump pressure Pi is fed from the pilot pump port Xpi to the pressure introduction chamber Ypi.

The fourth or lowermost pressure introduction chamber Ypa is formed by the recess 225 of the balance piston 210 and the abutment wall 31. A load pressure Pa from the load pressure chamber 40 is introduced into the pressure introduction chamber Ypa via the through hole 31a.

Operation of the Pressure Compensation Valve 200

When a main pump P later described is driven to apply a pump pressure P to the lower end portion of the axial hole 230 of the balance piston 210 from the pump port Xp of the body 11 via the annular groove 33 and the holes 232 of the balance piston 210, the valve body 410 of the load check valve 400 is urged upward and opened.

When the balance piston 210 is in its lowermost position as shown in Fig. 4, the land portion 212 is disposed in contact with the guide portion 36 of the vertical hole 30 over the entire periphery thereof to close the throttle portion 216. Therefore, in this condition, the passages 50 are not in communication with the pump port Xp. When the balance piston 210 moves upward a predetermined amount, the throttle portion 216 is opened. The degree of opening of the throttle portion 216 increases as the balance piston 210 further moves upward.

Next, the forces to be applied to the balance piston 210 will now be described. The spring 226 is designed to absorb vibrations, and the force exerted by the spring 226 on the balance piston 210 is so small that it can be disregarded. Although the pump pressure P is applied from the pump port Xp to the land portions 213 and 214 via the annular groove 33 of the body 11, the forces acting respectively on the land portions 213 and 214 cancel each other since the pressure receiving areas of these two land portions 213 and 214 are equal to each other. The pump pressure P also urges the valve body 410 of the load check valve 400 upward, and is applied to the land portions 212 and 213 via the holes 233 and the annular recess 221. However, the forces acting respectively on the land portions 212 and 213 cancel each other since the pressure receiving areas of these two land portions 212 and 213 are equal to each other. Therefore, the forces exerted by the pump pressure P directly on the balance piston 210 are disregarded.

The load pressure Pa introduced into the pressure introduction chamber Ypa and the pilot pump pressure Pi introduced into the pressure introduction chamber Ypi act to urge the balance piston 210 upward so as to open the throttle portion 216. The supply pressure Ps introduced into the pressure introduction chamber Yps and the control pressure Pc introduced into the pressure introduction chamber Ypc act to urge the balance piston 210 downward so as to close the throttle portion 216.

Next, the effective pressure receiving areas of the balance piston 210 at the pressure introduction chambers Ypc, Yps, Ypi and Ypa will now be described. The effective pressure receiving area Spa of the balance piston 210 at the pressure introduction chamber Ypa is determined by the diameter d1 of the land portion 215 of the balance piston 210. The effective pressure receiving area Spi of the balance piston 210 at the pressure introduction chamber Ypi is determined by the difference between the diameter d2 of the land portion 214 and the diameter d1 of the land portion 215. The effective pressure receiving area Sps of the balance piston 210 at the pressure introduction chamber Yps is determined by the difference between the diameter d2 of the land portion 211 and the diameter d3 of the land portion 241. The effective pressure receiving area Spc of the balance piston 210 at the pressure introduction chamber Ypc is determined by the diameter d3 of the land portion 241. These are expressed by the following formulas:

$$Spa = \pi d1^2/4$$
$$Spi = \pi(d2^2 - d1^2)/4$$
$$Sps = \pi(d2^2 - d3^2)/4$$
$$Spc = \pi d3^2/4$$

Therefore, the force Fo urging the balance piston 210 to move in the direction to open the throttle portion 216 can be represented by the following formula:

$$Fo = (Pa \times Spa) + (Pi \times Spi) \qquad (1)$$

The force Fd urging the balance piston 210 to move in the direction to close the throttle portion 216 can be represented by the following formula:

$$Fd = (Ps \times Sps) + (Pc \times Spc) \qquad (2)$$

The position of the balance piston 210 (and hence the degree of opening of the throttle portion 216 of the pressure compensation valve 200) is determined in such a manner that the opening force Fo and the closing force Fd are equal to each other.

In this embodiment, the relation of the effective pressure receiving areas is represented by the following formula:

$$Spa = Sps > Spi = Spc \qquad (3)$$

Next, the operation of the pressure compensation valve 200 will now be described from the viewpoint of its pressure compensation function. As described above, the position of the balance piston 210 is determined in such a manner that the formula (Fo = Fd) is established. From the above formulas (1), (2) and (3), the formula (Fo = Fd) can be expressed as follows:

$$Ps - Pa = K (Pi - Pc) \qquad (4)$$

where K is equal to (Spi/Spa).

Thus, it will be appreciated from the formula (4) that the position of the balance piston 210 (and hence the degree of opening of the throttle portion 216) is so controlled that the difference (Ps -Pa) between the supply pressure and the load pressure can be maintained at K (Pi - Pc).

Next, the operation of the pressure compensation valve 200 will now be described more specifically. When the degree of opening of the throttle portion 115 corresponding to the actuator port A or the actuator port B increases in accordance with the movement of the spool 110 of the directional control valve 100, the balance piston 210 is moved upward so as to increase the degree of opening of the throttle portion 216. As a result, the flow rate (flow amount per unit time) of the throttle portion 115 is increased so that the above pressure difference (Ps - Pa) can be kept at K (Pi - Pc), thereby increasing the amount of supply of the oil to the corresponding actuator. In contrast, when the degree of opening of the throttle portion 115 of the directional control valve 100 is decreased, the degree of opening of the throttle portion 216 of the pressure compensation valve 200 is decreased, thereby decreasing the amount of supply of the oil to the corresponding actuator. Thus, in accordance with the amount of the operation of the directional control valve 100, the amount of supply of the oil to the actuator and hence the speed of driving of the actuator can be controlled.

When the load of the corresponding actuator increases to increase the load pressure Pa, the degree of opening of the throttle portion 216 increases so as to increase the supply pressure Ps, thereby maintaining the difference between the two pressures Ps and Pa at K (Pi - Pc). In contrast, when the load of the actuator decreases to decrease the load pressure Pa, the degree of opening of the throttle portion 216 is decreased so as to decrease the supply pressure Ps. With this arrangement, irrespective of variations in the load of the actuator, the amount of supply of the oil to the actuator per unit time (and hence the speed of driving of the actuator) in accordance with the amount of the operation of the directional control valve 100 can be maintained in a stable manner.

## Construction of the Shuttle Valve 300

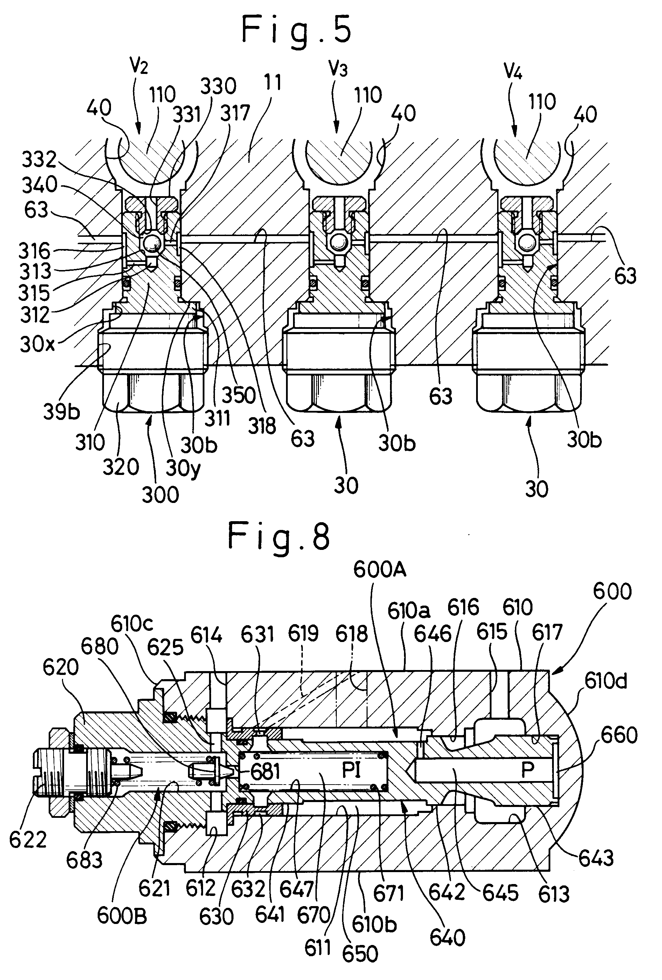

Next, the shuttle valve 300 will now be descried. As best shown in Fig. 5, the shuttle valve 300 includes a holder 310 received oil-tight in the lower portion 30b of the vertical hole 30. The holder 310 has a peripheral flange 311 eccentric from the the axis of the holder 310. The flange 311 is received in a counterbore 30x provided at the lower portion 30b of the vertical hole 30, the counterbore 30x being eccentric from the axis of the vertical hole 30. With this arrangement, the holder 310 is received in position in the lower portion 30b of the vertical hole 30. A plug 320 is threaded into the threaded portion 39b provided at the lower end of the lower portion 30b. The plug 320 urges the flange 311 of the holder 310 against a stepped portion 30y formed on the inner peripheral surface of the vertical hole 30, thereby holding the holder 310 against movement.

The holder 310 has an axial stepped hole 312 extending downward from its upper end face. A tapered shoulder or step 313 formed on the inner peripheral surface of the axial hole 312 serves as a first valve seat. A valve seat member 330 is threaded into the upper end portion of the axial hole 312, the valve seat member 330 having an axial hole 331 (first inlet port) formed therethrough. A tapered lower surface 332 of the valve seat member 330 serves as a second valve seat. That portion of the axial hole 312 disposed between the second valve seat 332 and the first valve seat 313 serves as a valve chamber 340. A valve member 350 in the form of a ball is received within the valve chamber 340.

The valve chamber 340 communicates with the load pressure chamber 40 via the axial hole 331 of the valve seat member 330. The valve chamber 340 is also connected to the left-hand passage 63 (Fig. 5) via a transverse hole 315 (which is formed in the holder 310 and extends between the lower end of the axial hole 312 and the outer peripheral surface of the holder 310) and an axial groove 316 formed in the outer peripheral surface of the holder 310. The transverse hole 315 and the axial groove 316 jointly provide a second inlet port. The valve chamber 340 is also connected to the right-hand passage 63 via a transverse hole 317, formed in the holder 310, and an axial groove 318 formed in the outer peripheral surface of the holder 310. The transverse hole 317 and the vertical groove 318 jointly provide an outlet port.

The shuttle valves 300 are incorporated or contained respectively in the five regions V2 to V6 of the body 11. The other region V1 disposed adjacent to the end face 11e of the body 11 does not need the shuttle valve 300, and therefore the lower end of the vertical hole 30 of the region V1 is closed by a closure member instead of the shuttle valve 300.

At the region V1, the vertical hole 30 may not open to the lower face 11b of the body 11. Also, at the region V1, the shuttle valve 300 may be mounted in the lower portion 30b of the vertical hole 30 as described above for the other five regions V2 to V6, in which case the shuttle valve 300 at the region V1 does not make a comparison between two pressures as described later but merely passes the pressure of the load pressure chamber 40 to the right-hand passage 63.

### Operation of the Shuttle Valve 300

In each of the shuttle valves 300, the oil pressure fed to this shuttle valve 300 via the left-hand passage 63 from the adjacent shuttle valve 300 disposed on the left side thereof is compared with the load pressure Pa of the load pressure chamber 40 to which the shuttle valve 300 is exposed. In other words, if the pressure fed from the left-hand passage 63 is higher than the load pressure Pa, the valve member 350 moves upward into contact with the second valve seat 332, so that the valve chamber 340 is communicated with the passage 63 and that the communication of the valve chamber 340 with the load pressure chamber 40 is interrupted. As a result, the pressure of the left-hand passage 63 is fed to the right-hand passage 63 via the valve chamber 340. In contrast, if the load pressure Pa is higher than the pressure of the left-hand passage 63, the valve member 350 moves downward into contact with the first valve seat 313, so that the valve chamber 340 is communicated with the load pressure chamber 40 and that the communication of the valve chamber 340 with the left-hand passage 63 is interrupted. As a result, the load pressure Pa is fed to the right-hand passage 63 via the valve chamber 340.

In this manner, the maximum or greatest load pressure Pl among the load pressures Pa introduced respectively into the six regions V1 to V6 is outputted from the detection pressure port D connected to the shuttle valve 300 of the final stage (that is, the shuttle valve 300 disposed adjacent to the end face 11f of the body 11).

### Construction of the Unload and Relief Valve Device 600

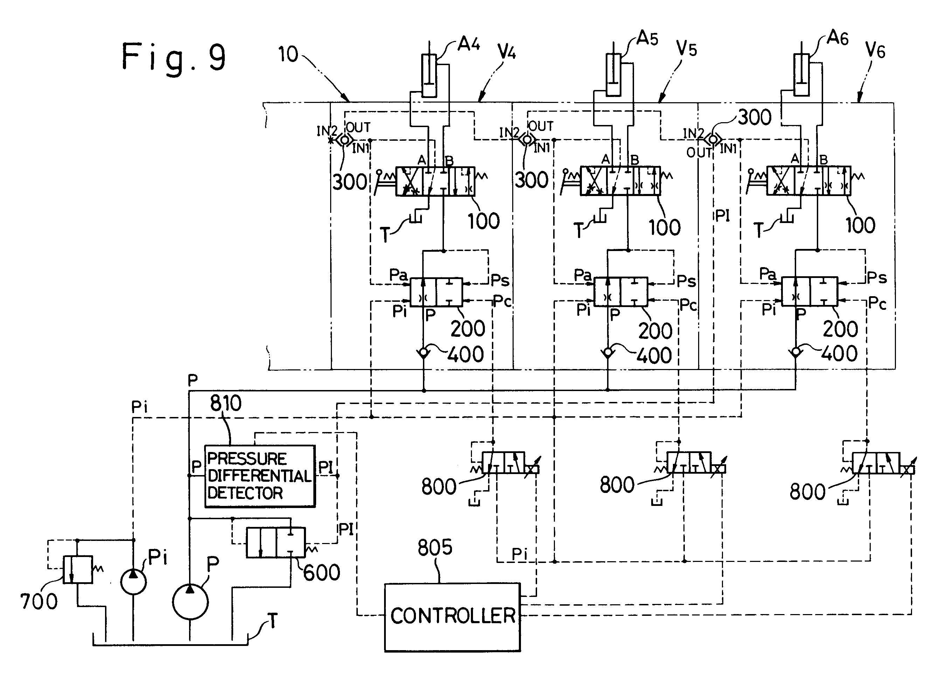

Next, the unload and relief valve device 600 mounted in stacked relation to the body 11 will now be described with reference to Fig. 8. The unload and relief valve device 600 includes a body 610 in the form of a unitary block. The body 610 has opposite parallel side faces 610a and 610b which are substantially flat, and opposite end faces 610c and 610d. The body 610 is mounted in stacked relation to the body 11, with the side face 610a abutted against the end face 11f of the body 11.

The body 610 has an axial hole 611, and one end of the axial hole 611 is closed while the other end of the axial hole 611 is open to the end face 610c of the body 610. A plug 620 is threaded into the open end of the axial hole 611. Annular grooves 612 and 613 are formed in the inner peripheral surface of the axial hole 611, and are disposed respectively adjacent to the opposite ends of the axial hole 611. The annular grooves 612 and 613 communicate respectively with the tank ports Xt of the body 11 via respective passages 614 and 615 formed in the body 610. The annular grooves 612 and 613 also communicate with a single tank port (not shown) formed in the upper surface of the body 610 which is substantially parallel to the sheet of Fig. 8. This tank port is connected to a tank T (Fig. 9) via a pipe.

The inner peripheral surface of the axial hole 611 has guide portions 616 and 617 which are disposed on the opposite sides of and immediately adjacent to the the annular groove 613. A tubular guide member 630 is fixedly fitted in the axial hole 611, and is disposed on the right side (Fig. 8) of and immediately adjacent to the annular groove 612.

An unload valve 600A is received within the axial hole 611. The unload valve 610A comprises a spool 640 which has three land portions 641, 642 and 643 arranged in this order from the left (Fig. 8). The left-hand land portion 641 is always held in contact with the right-hand end portion of the inner peripheral surface of the guide member 630. The right-hand land portion 643 is always held in contact with the guide portion 617. The intermediate land portion 642 is brought into and out of contact with the guide portion 616, depending on the position of the spool 640.

A pump pressure chamber 650 is defined by the inner peripheral surface of the axial hole 611, the outer peripheral surface of the spool 640, the guide portion 616 and the guide member 630. The pump pressure chamber 650 is connected to the pump ports Xp of the body 11 via a passage 618 formed in the body 610. The pump pressure chamber 650 also communicates with a pump port (not shown) formed in the upper surface of the body 610. This pump port in the body 610 is connected to the main pump P (Fig. 9) via a pipe.

A pilot chamber 660 is formed between the right end face of the spool 640 and the right end wall of the body 610. The pilot chamber 660 communicates with the pump pressure chamber 650 via an axial hole 645 (which is formed in the right end portion of the spool 640) and a hole 646 of a small diameter extending between the axial hole 645 and the outer peripheral surface of the spool 640. Therefore, the pump pressure of the main pump P is introduced into the pilot chamber 660.

Another axial hole 647 is also formed in the left end portion of the spool 640. A pressure introduction chamber 670 is defined by the axial hole 647, the inner peripheral surface of the guide member 630 and the right end of the plug 620. A spring 671 is received within the pressure introduction chamber 670, and urges the spool 640 in a right-hand direction. The pressure introduction chamber 670 is connected to the detection pressure port D of the body 11 via an orifice 631 formed through the peripheral wall of the guide member 630, an annular groove 632 in the outer peripheral surface of the guide member 630 and a passage 619 formed in the body 610. Therefore, the aforesaid maximum load pressure Pl detected by the shuttle valve 300 is introduced into the pressure introduction chamber 670.

An axial hole 621 is formed in the plug 620 and is open to the left end face of the plug 620. A relief valve 600B is received within the axial hole 621. More specifically, a set screw 622 is threaded into the left end portion of the axial hole 621. The axial hole 621 communicates with the annular groove 612 via holes 625 of a small diameter formed through the peripheral wall of the plug 620. The axial hole 621 also communicates with the pressure introduction chamber 670 via a valve port 681 formed through the right-hand end wall of the plug 620. The valve port 681 is opened and closed by a valve member 680 received within the axial hole 621. A spring 683 is also received within the axial hole 621, and urges the valve member 680 toward the valve port 681 to close the same.

The annular groove 632 in the outer periphery of the guide member 630 is connected to a detection pressure port (not shown) formed in the upper surface of the body 610, and this detection pressure port in the body 610 is connected via a pipe to one of input ports of a pressure differential detector 810 later described.

The body 610 has a passage connected at one end to the pilot pump port Xpi of the body 11, and the other end of this passage is connected via a pipe to a pilot pump Pi later described.

As described above, the ports Xp, Xpi, Xt and D of the body 11 are connected respectively to the main pump P, the pilot pump port Pi, the tank T and the pressure differential detector 810 via the respective passage means (formed in the body 610) and pipes.

### Operation of the Unload and Relief Valve Device 600

In the unload valve 600A, the degree of opening between the land portion 642 and the guide portion 616 is so controlled that the left-directed force due to the pump pressure introduced into the pilot chamber 660 is balanced with the right-directed force due to the maximum load pressure (introduced into the pressure introduction chamber 670) and the force of the spring 671. Therefore, the pump pressure P is controlled so as to satisfy the following formula:

$$P = Pl + \Delta P \qquad (5)$$

where $\Delta P$ represents the resilient force of the spring 671 in terms of pressure.

However, as later described, when the total amount of the oil required by the actuators per unit time exceeds the ability of the main pump P to output the oil so that the pressure P of the main pump P decreases, the land portion 642 is brought into contact with the guide portion 616 to close the unload valve 600A. At this time, the difference between the pump pressure P and the maximum load pressure Pl becomes less than $\Delta P$.

Also, when the maximum load pressure Pl exceeds the relief pressure Pr determined by the spring 683 of the relief valve 600B, the valve member 680 is moved to the left to open the valve port 681. Therefore, the pressure in the pressure introduction chamber 670 will not be above the relief pressure Pr. Therefore, the maximum value Pmax of the pump pressure is determined by the following formula:

$$Pmax = Pr + \Delta P$$

Therefore, in this case, also, the difference between the pump pressure Pmax and the maximum load pressure Pl is less than $\Delta P$.

### Construction of the Hydraulic Control System

Next, the overall construction of the hydraulic control system including the hydraulic control apparatus 10 will now be described with reference to Fig. 9. In addition to the above-mentioned devices, the hydraulic system further comprises the following devices. A relief valve 700 is connected to the outlet side of the pilot pump Pi, and the pilot pump pressure Pi fed from the pilot pump Pi is maintained at a constant level. Electromagnetic proportional pressure control valves 800 corresponding in number to the actuators A1 to A6 are connected via pipes respectively to the control pressure ports C of the regions V1 to V6 of the hydraulic control apparatus 10. The hydraulic control system further comprises pressure differential detector 810, and a controller 805 which is responsive to a detection signal from the pressure differential detector 810 to control the electromagnetic proportional pressure control valves 800.

### Operation of the Hydraulic Control System

The pressure differential detector 810 detects the difference between the pump pressure P and the maximum load pressure Pl. The controller 805 controls the electromagnetic proportional pressure control valves 800 in accordance with the thus detected pressure differential (P - Pl), so that the valves 800 respectively output the control pressure Pc, represented by the following formula, to the control pressure ports C of the regions V1 to V6:

$$Pc = Pi - (P - Pl) \qquad (6)$$

From the formula (6), the above formula (4) can be expressed as follows:

$$Ps - Pa = K (P - Pl) \qquad (7)$$

As is clear from the formula (7), each pressure compensation valve 200 controls so that the difference between the supply pressure Ps and the load pressure Pa is proportional to the difference between the pump pressure P and the maximum load pressure Pl.

When the total amount of the oil required by the actuators A1 to A6 per unit time is less than the ability of the main pump P to output the oil and at the same time when the maximum load pressure Pl is lower than the relief pressure Pr of the relief valve 600B (Fig. 8), the pump pressure P is so controlled by the unload valve 600A as to be higher than the maximum load pressure Pl by the pressure $\Delta P$ corresponding to the resilient force of the spring 671, as indicated in the above formula (5). Therefore, the formula (7) can be expressed as follows:

$$Ps - Pa = K \cdot \Delta P \qquad (8)$$

As is clear from the formula (8), in each of the pressure compensation valves 200 corresponding respectively to the actuators, the pressure difference between the supply pressure Ps and the load pressure Pa is controlled to the constant level $K \cdot \Delta P$. By doing so, the amount of supply of the oil to the actuator per unit time is maintained at a level corresponding to the degree of opening of the throttle portion 115 of the directional control valve 100. As a result, the speed of driving of the actuator is kept at a level corresponding to the amount of the operation of the spool 110.

When the total amount of the oil required by the actuators A1 to A6 per unit time exceeds the ability of the main pump P to output the oil so that the pressure P of the main pump P decreases, the unload valve 600A is closed, but the the difference between the pump pressure P and the maximum load pressure Pl is less than above-mentioned $\Delta P$.

Therefore, the pressure differences (Ps - Pa) in all of the pressure compensation valves 200 becomes less than $K \cdot \Delta P$, and as a result the amounts of supply of the oil to all of the actuators in their driving condition per unit time decrease, so that the speeds of driving of the actuators are decreased at the same rate. As described above, the total amount of the oil required by the actuators in their driving condition is limited, thereby ensuring that all of the pressure compensation valves 200 can continue to properly perform their functions. As a result, not only the actuators under low load but also the actuators under high load can properly operate in a well balanced manner.

Also, when the load of any one of the actuators A1 to A6 increases so that the maximum load pressure Pl exceeds the relief pressure Pr of the relief valve 600B, the pump pressure P controlled by the unload valve 600A ceases to vary in response to the maximum load pressure Pl and is kept at the maximum pump pressure Pmax. The control pressure Pc at this time is expressed by the following formula derived from the formula (6):

$$Pc = Pi - (Pmax - Pl) \qquad (9)$$

From the formula (9), the formula (4) can be expressed as follows:

$$Ps - Pa = K (Pmax - Pl) \qquad (10)$$

(Pmax - Pl) in the formula (10) is less than the above constant value $\Delta P$, and decreases as the maximum load pressure Pl increases. Therefore, in this case, also, the pressure difference (Ps - Pa) in the pressure compensation valve 200 becomes small, and hence the amount of supply of the oil to the actuators per unit time becomes small.

In the pressure compensation valve corresponding to the actuator subjected to the maximum load pressure Pl, Pl is equal to Pa (Pl = Pa). Therefore, the formula (7) can be expressed as follows:

$$Ps - Pl = K (P - Pl) \qquad (11)$$

In this formula (11), K is less than 1 (K < 1), and therefore it is clear that the supply pressure Ps is always less than the pump pressure P. This means that even the throttle portion 216 of the pressure compensation valve corresponding to the actuator subjected to the maximum load pressure, like the throttle portions 216 of the other pressure compensation valves 200, is not fully opened, thus always ensuring its throttle function.

The controller 805 has means by which the outputs of the electromagnetic proportional pressure control valves 800 can be manually set at respective individual values. With this arrangement, when necessary, the value of the control pressure Pc, outputted from a selected one of these valves 800, is set at zero, so that the throttle portion 216 of the corresponding pressure compensation valve 200 is fully opened, thereby releasing the function of this pressure compensation valve 200.

Advantages of the Hydraulic Control System

In the hydraulic pressure control system, the load pressure chamber 40 is provided at the intersection between the vertical hole 30 and the transverse hole 20, and the pressure compensation valve 200 and the shuttle valve 300 are mounted respectively in the upper and lower portions 30a and 30b of the vertical hole 30. Both of the pressure compensation valve 200 and the shuttle valve 300 are exposed to the load pressure chamber 40. With this arrangement, the construction of the hydraulic pressure control system is quite simplified. In addition, the transverse hole 20, the vertical hole 30 and the pair of passages 50 and 50 in each of the regions V1 to V6 of the body 11 is disposed substantially on the plane disposed perpendicular to the direction of arrangement of the regions V1 to V6 of the body 11. The directional control valve 100, the pressure compensation valve 200 and the shuttle valve 300 at any one of the regions V1 to V6 are disposed on the above plane. With this arrangement, the hydraulic control apparatus 10 can be very compact in construction.

Modifications of the Invention

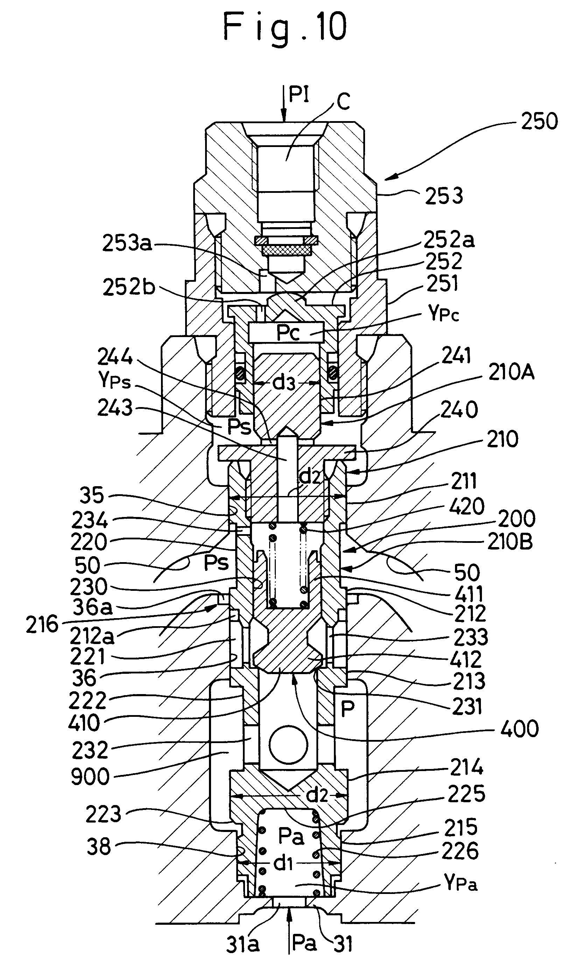

As shown in Fig. 10, the main pump pressure P may be introduced into each pressure introduction chamber 900 to which the step 223 of the balance piston 210 is exposed, and the maximum load pressure Pl may be introduced directly into the corresponding port C via a pipe. With this arrangement, the pressure compensation valve 200 operates so that the above formula (7) can be established. Those parts of Fig. 10 corresponding to those of Fig. 4 are designated by identical reference numerals, respectively, and will not be described further here. The embodiment of Fig. 10 obviates the need for the electromagnetic proportional control valves 800 and the controller 805 of the preceding embodiment. According to another modified form of the invention, each port C may be omitted in the embodiment of Fig. 10, in which case the maximum load pressure Pl is introduced into the pressure introduction chamber Ypc via a passage formed in the body 11.

Instead of the constant pressure Pi, the pressure (P - Pl) from the electromagnetic proportional pressure control valve 800 (Fig. 9) may be introduced into the pressure introduction chamber Ypi, in which case the pressure introduction chamber Ypc is omitted or is communicated with the atmosphere.

In the case where the hydraulic control system includes two actuators, only one shuttle valve may be used.

Further, the body 610 of the unload and relief valve device 600 may be integral with the body 11.

The regions V1 to V6 of the body 10 may be formed respectively by separate blocks, in which case these separate blocks are connected together in stacked relation to one another.

According to a futher modified form of the invention, check valves may be used as detection valves instead of the shuttle valves. Since each check valve is similar in construction to each shuttle valve 300 shown in Fig. 5, the check valves are not shown here, and instead will now be described with reference to Fig. 5. Instead of the axial grooves 313 and 318, a groove is formed in the outer peripheral surface of each holder 310 either over the entire periphery or about a half of the periphery of the holder 310, holes 317 and 315 communicating with this groove. Each adjacent passages 63 and 63 are connected together via this groove. The check valves are received respectively in the lower portions 30b of all the regions V1 to V6 corresponding respectively to the actuators. A valve member 350 of the check valve which receives the maximum load pressure from the load pressure chamber 40 is engaged with a first valve seat 313, and the maximum load pressure is applied to all of the other check valves via the passages 63. Therefore, in each of the other check valves, the valve member 350 is moved into contact with a second valve seat 332 to interrupt the communication between the load pressure chamber 40 and a valve chamber 340. Thus, the maximum load pressure is outputted from the detection port D (Fig. 6). One of the passages 63 is connected to the tank via a passage (formed in the body 11 and having an orifice) so as to relief the pressures in all of the passages 63, so that the check valves can respond to the maximum load pressure.

**Claims**

1. A hydraulic control system for driving a plurality of actuators (A1 to A6), comprising:
   (a) a pump (P);
   (b) a plurality of directional control valves (100) corresponding respectively to the plurality of actuators (A1 to A6), each directional control valve comprising a pair of downstream throttle portions (115) disposed between said pump (P) and the corresponding actuator, and a spool (110) for controlling the degree of opening of said pair of downstream throttle portions (115), and either of said two downstream throttle portions being opened in accordance with the movement of said spool (110) to apply fluid to the corresponding actuator from said pump (P);

(c) detection valve means (300,810) comprising at least one detection valve (300) for detecting the maximum load pressure (PI) among load pressures of the plurality of actuators (A1 to A6); and

(d) a plurality of pressure compensation valves (200) corresponding respectively to the plurality of actuators, each pressure compensation valve comprising an upstream throttle portion (216) disposed between said pump (P) and said pair of downstream throttle portions (115), and a balance piston (210) for controlling the degree of opening of said upstream throttle portion (216), said balance piston (210) having a first pressure receiving portion (215) for receiving the load pressure ($P_a$) of the corresponding actuator so as to move said balance piston in a direction to open said upstream throttle portion (216), said balance piston (210) also having a second pressure receiving portion (240) for receiving a supply pressure ($P_s$) supplied from said upstream throttle portion (216) to said downstream throttle portions (115) so as to move said balance piston (210) in a direction to close said upstream throttle portion (216), said balance piston including pressure receiving means (223, 241) for substantially receiving an operating pressure ($P_i, P_c$) which decreases when the difference between the pressure (P) of said pump and the maximum load pressure (PI) detected by said detection valve means (300,810) decreases so that said balance piston (210) can be moved in the direction to open said upstream throttle portion (216), and the position of said balance piston (210) being so controlled that the force acting on said balance piston due to the difference between said supply pressure ($P_s$) and said load pressure ($P_a$) can be in equilibrium with the force acting on said balance piston due to said operating pressure ($P_i, P_c$) received by said pressure receiving means (223,241);

CHARACTERIZED by the provision of body means (11) comprising a plurality of regions (V1 to V6) corresponding respectively to the plurality of actuators (A1 to A6), said plurality of directional control valves (100) as well as said plurality of pressure compensation valves (200) being mounted respectively in said plurality of regions (V1 to V6), each of said regions including a straight first hole (20) and a straight second hole (30) substantially perpendicularly intersecting a central portion of said first hole, said spool (110) being slidably received in said first hole (20) of the corresponding region of said body means (11), the intersection between said first and second holes (20,30) forming a load pressure chamber (40) for receiving the load pressure ($P_a$) of the corresponding actuator, and said second hole (30) having a first portion (30a) and a second portion (30b) between which said load pressure chamber (40) is interposed, said balance piston (210) of said pressure compensation valve (200) being slidably received in said first portion (30a) of said second hole (30) of the corresponding region of said body means (11), said first pressure receiving portion (215) of said balance piston (210) being directed toward said load pressure chamber, and said detection valve (300) being received in said second portion (30b) of said second hole (30) of one of said regions (V1 to V6) of said body means (11) so as to receive the load pressure ($P_a$) from said load pressure chamber (40).

2. A hydraulic control system according to claim 1, in which said plurality of regions (V1 to V6) of said body means (11) are arranged in juxtaposed relation to one another, said first hole (20) and second hole (30) of each of said plurality of regions (V1 to V6) being disposed on a plane perpendicular to the direction of arrangement of said plurality of regions.

3. A hydraulic control system according to claim 2, in which said body means (11) comprises a unitary block having said plurality of regions (V1 to V6) arranged continuously with one another.

4. A hydraulic control system according to claim 3, in which each of said plurality of regions (V1 to V6) has a pair of actuator ports (A, B) disposed on said plane, one ends of said two actuator ports opening to an outer surface of said block and being connected to the corresponding actuator (A1 to A6) whereas the other ends are connected to opposite side portions (20a, 20b) of said first hole (20) disposed respectively on the opposite sides of said load pressure chamber (40), each of said plurality of regions having a pair of first passages (50) disposed on said plane, one end of each of said first passages being connected to said first portion (30a) of said second hole (30) intermediate opposite ends of said first portion whereas the other end is connected to that portion of said first hole (20) disposed between said load pressure chamber and the other end of said actuator port.

5. A hydraulic control system according to claim 4, in which said spool (110) of said directional control valve (100) has a pair of second passages (120); in accordance with the movement of said spool in one direction, said load pressure chamber (40) being caused to communicate via one of said second passages (120) with one (A) of said pair of actuator ports through which the fluid from said pump (P) is flowing; and in accordance with the movement of said spool in the opposite direction, said load pressure chamber being caused to communicate via the other second passage (120) with the other actuator port (B) through which the fluid from said pump is flowing.

6. A hydraulic control system according to claim 5, in which said body means (11) has a fluid supply passage (33, 61) extending straight in the direction of arrangement of said plurality of regions and substantially perpendicularly intersecting said first portions (30a) of said second holes (30) of said plurality of regions (V1 to V6) intermediate opposite ends of each said first portion, one end of said fluid supply passage opening to the outer surface of said body means to form a pump port (Xp) connected to said pump (P), said balance piston (210) having a first land portion (212) slidably engaged with that portion of the inner peripheral surface of said second hole (30) disposed between the intersection of said fluid supply passage (33, 61) and said second hole and the intersection of each said first passage (50) and said second hole, said first land portion cooperating with said that portion to form said upstream throttle portion (216), said spool (110) having a pair of second land portions (113) slidably engaged with the inner periphery of said first hole (20), one of said pair of second land portions cooperating with that portion of the inner peripheral surface of said first hole disposed between the intersection of one of said two actuator ports (A, B) and said first hole and the intersection of one of said two first passages (50) and said first hole to form one of said two downstream throttle portion (115), and the other second land portion cooperating with that portion of the inner peripheral surface of said first hole disposed between the intersection of the other actuator port and said first hole and the intersection of the other first passage and said first hole to form the other downstream throttle portion.

7. A hydraulic control system according to claim 2, in which said pressure receiving means of said balance piston (210) comprises a third pressure receiving portion (223) for receiving a first control pressure, and a fourth pressure receiving portion (241) for receiving a second control pressure, the force acting on said balance piston due to said first control pressure serving to move said balance piston in the direction to open said upstream throttle portion (216), the force acting on said balance piston due to said second control pressure serving to move said balance piston in the direction to close said upstream throttle portion, and a difference between said first control pressure and said second control pressure defining said operating pressure received by said pressure receiving means, and being substantially equal to the difference between said pump pressure and said maximum load pressure.

8. A hydraulic control system according to claim 7, in which said fourth pressure receiving portion (241) is formed on one end of said balance piston (210) remote from said load pressure chamber (40), said second and third pressure receiving portions (240, 223) being formed on that portion of said balance piston disposed intermediate the opposite ends of said balance piston.

9. A hydraulic control system according to claim 7, further comprising a pressure differential detector (810) for detecting a difference between said pump pressure and said maximum load pressure to output a detection signal, means (Pi, 700) for producing said first control pressure, and means (800, 805) for producing said second control pressure, said first control pressure producing means comprising a pilot pump (Pi) for supplying said first control pressure of a constant level to said third pressure receiving portion (223) of said balance piston (210), said second control pressure producing means being responsive to said detection signal for supplying said second control pressure to said fourth pressure receiving portion (241), and said second control pressure being substantially equal to a value obtained from subtracting from said first control pressure the pressure difference detected by said pressure differential detector.

10. A hydraulic control system according to claim 9, in which said body means (11) further comprises a pilot pressure transmitting passage (34, 62) which extends straight in the direction of arrangement of said plurality regions (V1 to V6) and is connected to said first portions (30a) of said second holes (30) of said plurality of regions intermediate the opposite ends of said first portion (30a), one end of said transmitting passage opening to the outer surface of said body means to form a pilot pump port (Xpi), said third pressure receiving portion (223) of said balance piston (210) being exposed to that portion of said second hole (20) where said transmitting passage (34, 62) is connected to said second hole.

11. A hydraulic control system according to claim 7, in which said pump pressure is applied as said first control pressure directly to said third pressure receiving portion (223), the maximum load pressure from said detection valve means (300) being applied as said second control pressure to said fourth pressure receiving portion (241).

12. A hydraulic control system according to claim 2, in which said pressure receiving means has a third pressure receiving portion (223) for receiving a pressure substantially equal to a difference between said pump pressure and said maximum load pressure so as to move said balance piston (210) in the direction to open said upstream throttle portion (216).

13. A hydraulic control system according to claim 3, in which said detection valve means comprises a plurality of said detection valves each in the form of a shuttle valve (300), said shuttle valves being received respectively in said second portions (30b) of said second holes (30) of all of said regions of said body means except for one region (V1) disposed immediately adjacent to one end of said body means, each shuttle valve including a first inlet port (331) exposed to said load pressure chamber (40), a second inlet port (315, 316), and an output port (317, 318) said outlet port of one of each adjacent shuttle valves being connected to said second inlet port of the other shuttle valve via a pressure transmitting passage (63), said load pressure chamber of said one region (V1) of said body means being connected to said second inlet port of said shuttle valve of its adjoining region (V2) of said body means via a pressure transmitting passage (63), said outlet port of said shuttle valve of said region (V6) disposed immediately adjacent to the other end of said body means remote from said one region (V1) being connected via a pressure transmitting passage (63) to a detection pressure port (D) formed in the outer surface of said body means, so that the maximum load pressure is outputted from said detection pressure port, and all of said pressure transmitting passages being disposed along a straight line extending in the direction of arrangement of said plurality of regions.

## Patentansprüche

1. Hydraulisches Steuersystem zum Antreiben einer Vielzahl von Stellgliedern (A1 bis A16), das aufweist:

a) eine Pumpe (P);

b) eine Vielzahl von Richtungs-Steuerventilen (100), die jeweils der Vielzahl von Stellgliedern (A1 bis A6) entsprechen, wobei jedes Richtungs-Steuerventil ein Paar von unterstromigen Drosselabschnitten (115) aufweist, die zwischen der Pumpe (P) und dem entsprechenden Stellglied angeordnet sind, und eine Rolle (110) zum Steuern des Grads der Öffnung des Paars von unterstromigen Drosselabschnitten (115), wobei jeder der zwei unterstromigen Drosselabschnitte gemäß der Bewegung der Rolle (110) geöffnet wird, um Fluid an das entsprechende Stellglied von der Pumpe (P) anzulegen;

c) eine Erfassungs-Ventileinrichtung (300, 810), die wenigstens ein Erfassungsventil (300) zum Erfassen des maximalen Lastdrucks (PI) unter Lastdrücken der Vielzahl von Stellgliedern (A1 bis A6) aufweist; und

d) eine Vielzahl von Druck-Kompensationsventilen (200), die jeweils der Vielzahl von Stellgliedern entsprechen, wobei jedes Druck-Kompensationsventil einen oberstromigen Drosselabschnitt (216) aufweist, der zwischen der Pumpe (P) und dem Paar von unterstromigen Drosselabschnitten (115) angeordnet ist, und einen Ausgleichskolben (210) zum Steuern des Grads der Öffnung des oberstromigen Drosselabschnitts (216), wobei der Ausgleichskolben (210) einen ersten Druck-Aufnahmeabschnitt (215) hat zum Aufnehmen des Lastdrucks ($P_a$) des entsprechenden Stellgliedes, um den Ausgleichskolben in einer Richtung zu bewegen, um den oberstromigen Drosselabschnitt (216) zu öffnen, wobei der Ausgleichskolben (210) ferner einen zweiten Druck-Aufnahmeabschnitt (240) aufweist, um einen Zuführdruck ($P_s$) aufzunehmen, der von dem oberstromigen Drosselabschnitt (216) zu den unterstromigen Drosselabschnitten (115) geliefert wird, um den Ausgleichskolben (210) in einer Richtung zu bewegen, um den oberstromigen Drosselabschnitt (216) zu schließen, wobei der Ausgleichskolben eine Druck-Aufnahmeeinrichtung (223, 241) aufweist, um einen Arbeitsdruck ($P_i$, $P_c$) im wesentlichen aufzunehmen, welcher abnimmt, wenn die Differenz zwischen dem Druck (P) der Pumpe und dem maximalen Lastdruck (PI), erfaßt durch die Erfassungs-Ventileinrichtung (300, 810), abnimmt, so daß der Ausgleichskolben (210) in der Richtung bewegt werden kann, um den oberstromigen Drosselabschnitt (216) zu öffnen, und die Position des Ausgleichskolbens (210) so gesteuert ist, daß die auf den Ausgleichskolben aufgrund der Differenz zwischen dem Zuführdruck ($P_s$) und dem Lastdruck ($P_a$) wirkende Kraft im Gleichgewicht mit der auf den Ausgleichskolben aufgrund des Arbeitsdrucks ($P_i$, $P_c$), aufgenommen durch die Druck-Aufnahmeeinrichtung (223, 241), wirkenden Kraft sein kann;

gekennzeichnet durch das Vorsehen einer Körpereinrichtung (11), die eine Vielzahl von Regionen (V1 bis V6) aufweist, die jeweils der Vielzahl von Stellgliedern (A1 bis A6) entspricht, wobei die Vielzahl von Richtungs-Steuerventilen (100) ebenso wie die Vielzahl von Druck-Kompensationsventilen (200) jeweils in der Vielzahl von Regionen (V1 bis V6) angebracht ist, wobei jede der Regionen ein gerades erstes Loch (20) und ein gerades zweites Loch (30) aufweist, welches im wesentlichen senkrecht einen Mittelteil des ersten Lochs schneidet, wobei die Rolle (110) gleitfähig in dem ersten Loch (20) der entsprechenden Region der Körpereinrichtung (11) aufgenommen ist, wobei der Schnitt zwischen dem ersten und zweiten Loch (20, 30) eine Lastdruck-Kammer (40) bildet, um den Lastdruck ($P_a$) des entsprechenden Stellglieds aufzunehmen, und das zweite Loch (30) einen ersten Abschnitt (30a) und einen zweiten Abschnitt (30b) hat, zwischen denen die Lastdruck-Kammer (40) zwischengelagert ist, der Ausgleichskolben (210) des Druck-Kompensationsventils (200) gleitfähig in dem ersten Abschnitt (30a) des zweiten Lochs (30) der entsprechenden Region der Körpereinrichtung (11) aufgenommen ist, der erste Druck-Aufnahmeabschnitt (215) des Ausgleichskolbens (210) zu der Lastdruck-Kammer gerichtet ist, und das Erfassungsventil (300) in dem zweiten Abschnitt (30b) des zweiten Lochs (30) einer der Regionen (V1 bis V6) der Körpereinrichtung (11) aufgenommen ist, um den Lastdruck ($P_a$) von der Lastdruck-Kammer (40) aufzunehmen.

2. Hydraulisches Steuersystem nach Anspruch 1, bei dem die Vielzahl von Regionen (V1 bis V6) der Körpereinrichtung (11) in benachbarter Beziehung zueinander angeordnet sind, wobei das erste Loch (20) und das zweite Loch (30) aus jeder der Vielzahl von Regionen (V1 bis V6) auf einer Ebene angeordnet sind, die senkrecht zu der Richtung der Anordnung der Vielzahl von Regionen liegt.

3. Hydraulisches Steuersystem nach Anspruch 2, wobei die Körpereinrichtung (11) einen einheitlichen Block aufweist, bei dem die Vielzahl von Regionen (V1 bis V6) fortlaufend bezüglich einander angeordnet sind.

4. Hydraulisches Steuersystem nach Anspruch 3, wobei jede der Vielzahl von Regionen (V1 bis V6) ein Paar von Stellglied-Anschlüssen (A, B) aufweist, die auf der Ebene angeordnet sind, wobei die einen Enden der zwei Stellgliedanschlüsse sich zu einer Außenfläche des Blocks öffnen und mit dem entsprechenden Stellglied (A1 bis A6) verbunden sind, wogegen die anderen Enden mit gegenüberliegenden Seitenabschnitten (20a, 20b) des ersten Lochs verbunden sind, die jeweils auf den gegenüberliegenden Seiten der Lastdruck-Kammer (40) angeordnet sind, wobei jede der Vielzahl von Regionen ein Paar von ersten Durchgängen (50) hat, die auf der Ebene angeordnet sind, wobei ein Ende jeder der ersten Durchgänge mit dem ersten Abschnitt (30a) des zweiten Lochs (30) zwischen gegenüberliegenden Enden des ersten Abschnitts verbunden ist, wogegen das andere Ende mit dem Abschnitt des ersten Lochs (20) verbunden ist, das zwischen der Lastdruck-Kammer und dem anderen Ende des Stellgliedanschlusses angeordnet ist.

5. Hydraulisches Steuersystem nach Anspruch 4, wobei die Rolle (110) des Richtungs-Steuerventils (100) ein Paar von zweiten Durchgängen (120) hat, gemäß der Bewegung der Rolle in einer Richtung, wobei die Lastdruck-Kammer (40) veranlaßt wird, über einen der zweiten Durchgänge (120) mit einem (A) des Paars von Stellgliedanschlüssen zu verbinden durch den das Fluid von der Pumpe (P) fließt, und zwar gemäß der Bewegung der Rolle in der entgegengesetzten Richtung, wobei die Lastdruck-Kammer veranlaßt wird, über den anderen zweiten Durchgang (120) mit dem anderen Stellgliedanschluß (B) zu verbinden, durch den Fluid von der Pumpe fließt.

6. Hydraulisches Steuersystem nach Anspruch 5, wobei die Körpereinrichtung (11) einen Fluid-Zuführdurchgang (33, 61) hat, der sich gerade in der Richtung der Anordnung der Vielzahl von Regionen erstreckt und im wesentlichen senkrecht die ersten Abschnitte (30a) der zweiten Löcher (30) der Vielzahl von Regionen (V1 bis V6) zwischen gegenüberliegenden Enden des ersten Abschnitts schneidet, wobei ein Ende des Fluid-Zuführdurchgangs sich zur Außenfläche der Körpereinrichtung öffnet, um einen Pumpenanschluß ($X_p$) zu bilden, der mit der Pumpe (P) verbunden ist, wobei der Ausgleichskolben (210) einen ersten Landungsabschnitt (212) hat, der gleitfähig mit dem Abschnitt der inneren Randfläche des zweiten Lochs (30) in Eingriff ist, der zwischen dem Schnitt des Fluid-Zuführdurchgangs (33, 61) und dem zweiten Loch und dem Schnitt jedes ersten Durchgangs (50) und dem zweiten Loch angeordnet ist, wobei der erste Landungsabschnitt mit diesem Abschnitt zusammenwirkt, um den oberstromigen Drosselabschnitt (216) zu bilden, wobei die Rolle (110) ein Paar von zweiten Landungsabschnitten (113) hat, die gleitfähig mit dem Innenrand des ersten Lochs (20) in Eingriff sind, einer des Paars von zweiten Landungsabschnitten mit dem Abschnitt der inneren Randfläche des ersten Lochs zusammenwirkt, der zwischen dem Schnitt eines der zwei Stellgliedanschlüsse (A, B) und dem zweiten Loch und dem Schnitt eines der ersten Durchgänge (50) und dem ersten Loch angeordnet ist, um einen der zwei unterstromigen Drosselabschnitte (115) zu bilden, und der andere zweite Landungsabschnitt mit dem Abschnitt der inneren Randfläche des ersten Lochs zusammenwirkt, der zwischen dem Schnitt des ersten Stellgliedanschlusses und dem ersten Loch und dem Schnitt des anderen ersten Durchgangs und dem ersten Loch angeordnet ist, um den anderen unterstromigen Drosselabschnitt zu bilden.

7. Hydraulisches Steuersystem nach Anspruch 2, wobei die Druck-Aufnahmeeinrichtung des Ausgleichskolbens (210) einen dritten Druck-Aufnahmeabschnitt (223) aufweist, um einen ersten Steuerdruck aufzunehmen, und einen vierten Druck-Aufnahmeabschnitt (241) um einen zweiten Steuerdruck aufzunehmen, wobei die Kraft, die auf den Ausgleichskolben aufgrund des ersten Steuerdrucks wirkt, dazu dient, den Ausgleichskolben in der Richtung der Öffnung des oberstromigen Drosselabschnitts (216) zu bewegen, wobei die Kraft, die auf den Ausgleichskolben aufgrund des zweiten Steuerdrucks wirkt, dazu dient, den Ausgleichskolben in der Richtung des Schließens des oberstromigen Drosselabschnitts zu bewegen, und eine Differenz zwischen dem ersten Steuerdruck und dem zweiten Steuerdruck den Arbeitsdruck definiert, der durch die Druck-Aufnahmeeinrichtung aufgenommen ist, und im wesentlichen gleich ist der Differenz zwischen dem Pumpendruck und dem maximalen Lastdruck.

8. Hydraulisches Steuersystem nach Anspruch 7, wobei der vierte Druck-Aufnahmeabschnitt (241) auf einem Ende des Ausgleichskolbens (210) entfernt von der Lastdruck-Kammer (40) gebildet ist, wobei der zweite und dritte Druck-Aufnahmeabschnitt (240, 223) auf dem Abschnitt des Ausgleichskolbens gebildet ist, der zwischen den gegenüberliegenden Enden des Ausgleichskolbens angeordnet ist.

9. Hydraulisches Steuersystem nach Anspruch 7, ferner mit einem Druckdifferential-Detektor (810) zum Erfassen einer Differenz zwischen dem Pumpendruck und dem maximalen Lastdruck, um ein Erfassungssignal auszugeben, einer Einrichtung ($P_i$, 700) zum Erzeugen des ersten Steuerdrucks, und einer Einrichtung (800, 805) zum Erzeugen des zweiten Steuerdrucks, wobei die erste Steuerdruck-Erzeugungseinrichtung eine Vorpumpe ($P_i$) aufweist, um den ersten Steuerdruck von einem konstanten Pegel dem dritten Druck-Aufnahmeabschnitt (223) des Ausgleichskolbens (210) zuzuführen, wobei die zweite Steuerdruck-Erzeugungseinrichtung auf das Erfassungssignal anspricht, um den zweiten Steuerdruck zu dem vierten Druck-Aufnahmeabschnitt (241) zuzuführen, und der zweite Steuerdruck im wesentlichen gleich ist einem Wert, der durch Subtrahieren der durch den Druckdifferential-Detektor erfaßten Druckdifferenz von dem ersten Steuerdruck erhalten wird.

10. Hydraulisches Steuersystem nach Anspruch 9, wobei die Körpereinrichtung (11) ferner einen Vordruck-Übertragungsdurchgang (34, 62) aufweist, der sich gerade in der Richtung der Anordnung der Vielzahl von Regionen (V1 bis V6) erstreckt und mit den ersten Abschnitten (30a) der zweiten Löcher (30) der Vielzahl von Regionen zwischen den gegenüberliegenden Enden des ersten Abschnitts (30a) verbunden ist, wobei ein Ende des Übertragungsdurchgangs sich zur Außenfläche der Körpereinrichtung öffnet, um einen Vorpumpenanschluß (Xpi) zu bilden, wobei der dritte Druck-Aufnahmeabschnitt (223) des Ausgleichskolbens (210) dem Abschnitt des zweiten Lochs (20) ausgesetzt ist, wo der Übertragungsdurchgang (34, 62) mit dem zweiten Loch verbunden ist.

11. Hydraulisches Steuersystem nach Anspruch 7, wobei der Pumpendruck als der erste Steuerdruck direkt an den dritten Druck-Aufnahmeabschnitt (223) angelegt wird, wobei der maximale Lastdruck von der Erfassungsventileinrichtung (300) als der zweite Steuerdruck dem vierten Druck-Aufnahmeabschnitt (241) angelegt wird.

12. Hydraulisches Steuersystem nach Anspruch 2, wobei die Druck-Aufnahmeeinrichtung einen dritten Druck-Aufnahmeabschnitt (223) hat, um einen Druck im wesentlichen gleich einer Differenz zwischen dem Pumpendruck und dem maximalen Lastdruck aufzunehmen, um den Ausgleichskolben (210) in der Richtung der Öffnung des oberstromigen Drosselabschnitts (216) zu bewegen.

13. Hydraulisches Steuersystem nach Anspruch 3, wobei die Erfassungsventileinrichtung eine Vielzahl von Erfassungsventilen jeweils in der Form eines Wechselventils (300) aufweist, die Wechselventile jeweils in den zweiten Abschnitten (30b) der zweiten Löcher (30) aller Regionen der Körpereinrichtung aufgenommen sind, mit Ausnahme einer Region (V1), die unmittelbar benachbart einem Ende der Körpereinrichtung angeordnet ist, wobei jedes Wechselventil einen ersten Einlaßanschluß (321) aufweist, der der Lastdruck-Kammer (40) ausgesetzt ist, einen zweiten Einlaßanschluß (315, 316), und einen Auslaßanschluß (317, 318), wobei der Auslaßanschluß nes benachbarten Wechselventils verbunden ist mit dem zweiten Einlaßanschluß des anderen Wechselventils über einen Druck-Übertragungsdurchgang (63), wobei die Lastdruck-Kammer der einen Region (V1) der Körpereinrichtung verbunden ist mit dem zweiten Einlaßanschluß des Wechselventils der benachbarten Region (V2) der Körpereinrichtung über einen Druck-Übertragungsdurchgang (63), wobei der Auslaßanschluß des Wechselventils der Region (V6), die unmittelbar benachbart dem anderen Ende der von der einen Region (V1) entfernten Körpereinrichtung angeordnet ist, über einen Druck-Übertragungsdurchgang (63) mit einem Erfassungsdruckanschluß (D) verbunden ist, der in der anderen Fläche der Körpereinrichtung gebildet ist, so daß der maximale Lastdruck von dem Erfassungsdruckanschluß ausgegeben wird, und alle Druck-Übertragungsdurchgänge längs einer geraden Linie angeordnet sind, die sich in der Richtung der Anordnung der Vielzahl von Regionen erstreckt.

**Revendications**

1. Système de commande hydraulique pour l'entraînement d'une pluralité d'actionneurs (A1 à A6), comprenant :
   (a) une pompe (P);

(b) une pluralité de soupapes de commande directionnelles (100) correspondant respectivement à la pluralité d'actionneurs (A1 à A6), chaque soupape de commande directionnelle comprenant un couple de parties d'étranglement aval (115) disposées entre ladite pompe (P) et l'actionneur correspondant, et un tiroir (110) pour commander le degré d'ouverture dudit couple de parties d'étranglement aval (115), et l'une ou l'autre desdites deux parties d'étranglement aval étant ouverte en fonction du déplacement dudit tiroir (110) pour appliquer le fluide à l'actionneur correspondant à partir de ladite pompe (P);

(c) des moyens formant soupape de détection (300,810) comprenant au moins une soupape de détection (300) servant à détecter la pression de charge maximale (PI) parmi les pressions de charge de la pluralité d'actionneurs (A1 à A6); et

(d) une pluralité de soupapes de compensation de pression (200) correspondant respectivement à la pluralité d'actionneurs, chaque soupape de compensation de pression comprenant une partie d'étranglement amont (216) disposée entre ladite pompe (P) et ledit couple de parties d'étranglement aval (115), et un piston d'équilibrage (210) pour commander le degré d'ouverture de ladite partie d'étranglement amont (216), ledit piston d'équilibrage (210) comportant une première partie de réception de pression (215), qui reçoit la pression de charge $(P_a)$ de l'actionneur correspondant de manière à déplacer ledit piston d'équilibrage dans le sens de l'ouverture de ladite partie d'étranglement amont (216), ledit piston d'équilibrage (210) possédant également une seconde partie de réception de pression (240), qui reçoit une pression d'alimentation $(P_s)$ délivrée par ladite partie d'étranglement amont (216) auxdites parties d'étranglement aval (115) de manière à déplacer ledit piston d'équilibrage (210) dans le sens de fermeture de ladite partie d'étranglement amont (216), ledit piston d'équilibrage comprenant des moyens de réception de pression (223,241) servant à recevoir pour l'essentiel une pression de fonctionnement $(P_i, P_c)$, qui diminue lorsque la différence entre la pression (P) de ladite pompe et la pression de charge maximum (PI) détectée par lesdits moyens formant soupape de détection (300,810) diminue de telle sorte que ledit piston d'équilibrage (210) peut être déplacé dans le sens de l'ouverture de ladite partie d'étranglement amont (216), et la position dudit piston d'équilibrage (210) étant commandée de telle sorte que la force agissant sur ledit piston d'équilibrage sous l'effet de la différence entre ladite pression d'alimentation ($P_s$) et ladite pression de charge ($P_a$) peut être en équilibre avec la force agissant sur ledit piston d'équilibrage sous l'effet de ladite pression d'actionnement ($P_i$,$P_c$) reçue par lesdits moyens de réception de pression (223,241) ;

caractérisé en ce qu'il est prévu des moyens formant corps (11) comprenant une pluralité de régions (V1 à V6) correspondant respectivement à la pluralité d'actionneurs (A1 à A6), ladite pluralité de soupapes de commande directionnelles (100) ainsi que ladite pluralité de soupapes de compensation de pression (200) étant montées respectivement dans ladite pluralité de régions (V1 à V6), chacune desdites régions comprenant un premier trou rectiligne (20) et un second trou rectiligne (30), qui recoupent sensiblement perpendiculairement une partie centrale dudit premier trou, ledit tiroir (110) étant logé avec possibilité de glissement dans ledit premier trou (20) de la région correspondante desdits moyens formant corps (11), l'intersection entre lesdits premier et second trous (20,30) formant une chambre de pression de charge (40) servant à recevoir la pression de charge ($P_a$) de l'actionneur correspondant, et ledit second trou (30) possédant une première partie (30a) et une seconde partie (30b) entre lesquelles est intercalée ladite chambre de pression de charge (40), ledit piston d'équilibrage (210) de ladite soupape de compensation de pression (200) étant logé, avec possibilité de glissement, dans ladite première partie (30a) dudit second trou (30) de la région correspondante desdits moyens formant corps (11) ladite première partie de réception de pression (215) dudit piston d'équilibrage (210) étant dirigée vers ladite chambre de pression de charge, et ladite soupape de détection (300) étant logée dans ladite seconde partie (30b) dudit second trou (30) de l'une desdites régions (V1 à V6) desdits moyens formant corps (11) de manière à recevoir la pression de charge ($P_a$) de la part de ladite chambre de pression de charge (40).

2. Système de commande hydraulique selon la revendication 1, dans lequel ladite pluralité de régions (V1 à V6) desdits moyens formant corps (11) sont juxtaposées, ledit premier trou (20) et ledit second trou (30) de chaque région de ladite pluralité de régions (V1 à V6) étant disposés dans un plan perpendiculaire à la direction d'agencement de ladite pluralité de régions.

3. Système de commande hydraulique selon la revendication 2, dans lequel lesdits moyens formant corps (11) comprennent un bloc unitaire, dans lequel ladite pluralité de régions (V1 à V6) sont disposées continûment les unes à la suite des autres.

4. Système de commande hydraulique selon la revendication 3, dans lequel chaque région de ladite pluralité de régions (V1 à V6) comporte un couple d'orifices (A,B) pour un actionneur, situés dans ledit plan, les premières extrémités desdits deux orifices de l'actionneur débouchant dans une surface extérieure dudit bloc et étant raccordées à l'actionneur correspondant (A1 à A6), tandis que les autres extrémités sont raccordées à des parties latérales opposées (20a, 20b) dudit premier trou (20) situées respectivement sur les côtés opposés de ladite chambre de pression de charge (40), chaque région de ladite pluralité de régions possédant un couple de premiers passages (50) situés dans ledit plan, et l'extrémité de chacun desdits premiers passages étant raccordée à ladite première partie (30a) dudit second trou (30), située entre des extrémités opposées de ladite première partie, tandis que l'autre extrémité est raccordée à la partie dudit premier trou (20) située entre ladite chambre de pression de charge et l'autre extrémité dudit orifice de l'actionneur.

5. Système de commande hydraulique selon la revendication 4, dans lequel ledit tiroir (110) de ladite soupape de commande directionnelle (100) comporte un couple de seconds passages (120); en fonction du déplacement dudit tiroir dans un sens, ladite chambre de pression de charge (40) étant amenée à communiquer par l'intermédiaire de l'un desdits seconds passages (120) avec un orifice (A) dudit couple d'orifices de l'actionneur, dans lequel circule le fluide provenant de ladite pompe (P); et conformément au déplacement du tiroir dans le sens opposé, ladite chambre de pression de charge étant amenée à communiquer, par l'intermédiaire de l'autre second passage (120), avec l'autre orifice (B) de l'actionneur, dans lequel circule le fluide provenant de ladite pompe.

6. Système de commande hydraulique selon la revendication 5, dans lequel lesdits moyens formant corps (11) comportent un passage d'alimentation en fluide (33,61) qui s'étend selon un trajet rectiligne dans la direction d'agencement de ladite pluralité de régions et qui recoupe sensiblement perpendiculairement lesdites premières parties (30a) desdits seconds trous (30) de ladite pluralité de régions (V1 à V6) entre des extrémités opposées de chaque première partie, une extrémité dudit passage d'alimentation en fluide débouchant dans la surface extérieure desdits moyens formant corps de manière à former un orifice (Xp) raccordé à ladite pompe (P), ledit piston d'équilibrage (210) possédant une première portée (212) engagée, avec possibilité de glissement, avec la partie de la surface périphérique intérieure dudit second trou (30) disposée entre l'intersection dudit passage d'alimentation en fluide (33,61) et dudit second trou et l'intersection de chacun dudit premier passage (50) et dudit second trou, ladite portée coopérant avec ladite partie de manière à former ladite partie d'étranglement amont (216), ledit tiroir (110) possédant un couple de secondes portées (113) engagées avec possibilité de glissement contre la périphérie intérieure dudit premier trou (20), une portée dudit couple de secondes portées coopérant avec la partie de la surface périphérique intérieure dudit premier trou, située entre l'intersection de l'un desdits deux orifices (A,B) de l'actionneur et ledit premier trou et l'intersection de l'un desdits deux premiers passages (50) et dudit premier trou pour former l'une desdites deux parties d'étranglement aval (115), et la seconde portée coopérant avec la partie de la surface périphérique à l'intérieur dudit premier trou, située entre l'intersection de l'autre orifice de l'actionneur et ledit premier trou et l'intersection de l'autre premier passage et ledit premier trou pour former l'autre partie d'étranglement aval.

7. Système de commande hydraulique selon la revendication 2, dans lequel lesdits moyens de réception de la pression dudit piston d'équilibrage (210) comprennent une troisième partie de réception de pression (233), qui reçoit une première pression de commande, et une quatrième partie de réception de pression (241), qui sert à recevoir une seconde pression de commande, la force agissant sur ledit piston d'équilibrage sous l'effet de ladite première pression de commande servant à déplacer ledit piston d'équilibrage dans le sens de l'ouverture de ladite partie d'étranglement amont (216), la force agissant sur ledit piston d'équilibrage sous l'effet de ladite seconde pression de commande étant utilisée pour déplacer ledit piston d'équilibrage dans le sens de la fermeture de ladite partie d'étranglement amont, et une différence entre ladite première pression de commande et ladite seconde pression de commande définissant ladite pression de fonctionnement reçue par lesdits moyens de réception de pression, et étant sensiblement égale à la différence entre ladite pression de la pompe et ladite pression de charge maximale.

8. Système de commande hydraulique selon la revendication 7, dans lequel ladite quatrième partie de réception de pression (241) est formée sur une extrémité dudit piston d'équilibrage (210), qui est distante de ladite chambre de pression de charge (40), lesdites seconde et troisième parties de réception de pression (240, 223) étant formées sur la partie dudit piston d'équilibrage qui est située entre les extrémités opposées de ce piston.

9. Système de commande hydraulique selon la revendication 7, comprenant, en outre, un détecteur de pression différentielle (810) servant à détecter une différence entre ladite pression de la pompe et ladite pression de charge maximale pour délivrer un signal de détection, des moyens (Pi,700) pour produire ladite première pression de commande, et des moyens (800,805) pour produire ladite seconde pression de commande, lesdits moyens de production de la première pression de commande comprenant une pompe pilote (Pi) pour appliquer ladite première pression de commande à un niveau constant à ladite troisième partie de réception de pression (223) dudit piston d'équilibrage (210), lesdits moyens produisant la seconde pression de commande étant aptes à répondre audit signal de détection pour envoyer ladite seconde pression de commande à ladite quatrième partie de réception de pression (241), et ladite seconde pression de commande étant sensiblement égale à une valeur obtenue en soustrayant de ladite première pression de commande la différence de pression détectée par ledit détecteur de pression différentielle.

10. Système de commande hydraulique selon la revendication 9, dans lequel lesdits moyens formant corps (11) comprennent, en outre, un passage (34,62) de transmission de la pression pilote, qui s'étend selon une disposition rectiligne dans la direction d'agencement de ladite pluralité de régions (V1 à V6) et est raccordé auxdites premières parties (30a) desdits seconds trous (30) de ladite pluralité de régions entre les extrémités opposées de ladite première partie (30a), une extrémité dudit passage de transmission débouchant dans la surface extérieure desdits moyens formant corps de manière à former un orifice (Xpi) de la pompe pilote, ladite troisième partie (223) de réception de la pression, que comporte ledit piston d'équilibrage (210), étant exposée à la partie dudit second trou (20), dans laquelle ledit passage de transmission (34,62) est raccordé audit second trou.

11. Système de commande hydraulique selon la revendication 7, dans lequel ladite pression de la pompe est appliquée en tant que première pression de commande directement à ladite troisième partie de réception de pression (223), la pression de charge maximale délivrée par lesdits moyens formant soupape de détection (300) étant appliquée en tant que seconde pression de commande à ladite quatrième partie de réception de pression (241).

12. Système de commande hydraulique selon la revendication 2, dans lequel lesdits moyens de réception de pression comportent une troisième partie de réception de pression (223) servant à recevoir une pression sensiblement égale à une différence entre ladite pression de la pompe et ladite pression de charge maximale de manière à déplacer ledit piston d'équilibrage (210) dans le sens de l'ouverture de ladite partie d'étranglement amont (216).

13. Système de commande hydraulique selon la revendication 3, dans lequel lesdits moyens formant soupape de détection comprennent une pluralité desdites soupapes de détection chacune sous la forme d'une soupape à alternance (300), lesdites soupapes à alternance étant logées respectivement dans lesdites secondes parties (30b) desdits seconds trous (30) de l'ensemble desdites régions desdits moyens formant corps, hormis pour une région (V1) disposée dans une position directement adjacente à une extrémité desdits moyens formant corps, chaque soupape à alternance comprenant un premier orifice d'entrée (331) exposé à ladite chambre de pression de charge (40), un second orifice d'entrée (315,316), un orifice de sortie (317,318), ledit orifice de sortie de chacune des soupapes à alternance adjacente étant raccordé audit second orifice d'entrée de l'autre soupape à alternance par l'intermédiaire d'un passage de transmission de pression (63), ladite chambre de pression de charge de ladite première région (V1) desdits moyens formant corps étant raccordée audit second orifice d'entrée de ladite soupape à alternance de la région (V2), qui lui est adjacente, desdits moyens formant corps par l'intermédiaire d'un passage de transmission de pression (63), ledit orifice de sortie de ladite soupape à alternance de ladite région (V6) situé en position directement adjacente à l'autre extrémité desdits éléments formant corps, qui est distante de ladite première région (V1), étant raccordé par l'intermédiaire d'un passage de transmission de pression (63) à un orifice à pression de détection (D) formé dans la surface extérieure desdits moyens formant corps, de sorte que la pression de charge maximale est délivrée par ledit orifice à pression de détection, et l'ensemble desdits passages de transmission de pression étant disposé le long d'une ligne droite qui s'étend dans la direction d'agencement de ladite pluralité de régions.

23

# Fig.1

A₁ HYDRAULIC MOTOR FOR CAB

A₂ HYDRAULIC MOTOR FOR CRAWLER

A₃ HYDRAULIC MOTOR FOR CRAWLER

A6 HYDRAULIC CYLINDER FOR BUCKET

A5 HYDRAULIC CYLINDER FOR ARM

A4 HYDRAULIC CYLINDER FOR BOOM

11

V₁ V₂ V₃ V₄ V₅ V₆ 600

10

# Fig. 2

Fig.3

# Fig.4

# Fig.5

# Fig.8

# Fig.6

EP 0 368 636 B1

# Fig.7

# Fig.9

# Fig.10